# EUROPEAN PATENT SPECIFICATION

(11) **EP 4 507 282 B1**
(45) Date of publication and mention of the grant of the patent: **02.09.2026**
(21) Application number: 23816261.4
(22) Date of filing: 16.05.2023
(51) Int. Cl.: H04M 1/23, H01H 13/06, H05K 5/06, H04M 1/02, H01H 13/14, H04M 1/18

(54) **ELECTRONIC DEVICE COMPRISING KEY ASSEMBLY**
ELEKTRONISCHE VORRICHTUNG MIT SCHLÜSSELANORDNUNG
DISPOSITIF ÉLECTRONIQUE COMPRENANT UN ENSEMBLE CLÉ

(30) Priority: 30.05.2022 KR 20220066313; 14.09.2022 KR 20220115727
(43) Date of publication of application: 12.02.2025
(73) Proprietor: Samsung Electronics Co., Ltd., Suwon-si, Gyeonggi-do 16677 (KR)
(72) Inventor: KIM, Hoonjae, Suwon-si, Gyeonggi-do 16677 (KR); LEE, Wonchung, Suwon-si, Gyeonggi-do 16677 (KR)
(74) Representative: Gulde & Partner
(86) International application number: PCT/KR2023/006607
(87) International publication number: WO 2023/234598

(56) References cited:
- JP-B2- 6 844 987
- KR-A- 20170 046 542
- KR-A- 20170 070 602
- KR-A- 20210 098 797
- US-A1- 2014 085 781
- US-A1- 2017 142 239
- US-A1- 2019 295 788

## Description

### [Technical Field]

Various embodiments of the present invention relate to an electronic device including a key assembly.

### [Background Art]

The growth of electronics, information, and communication technologies leads to integration of various functions into a single electronic device. For example, smartphones pack the functionalities of a sound player, imaging device, and scheduler, as well as the communication functionality and, on top of that, may implement more various functions by having applications installed thereon. An electronic device may not only its equipped applications or stored files but also access, wiredly or wirelessly, a server or another electronic device to receive, in real-time, various pieces of information. Electronic device including key assemblies are disclosed in US 2014 / 085781 A1, US 2019 / 295788 A1 and KR 2017 0046542 A.

As it becomes more common for users to carry and use electronic devices, electronic devices may be exposed to various environments. For example, as the user's living space changes, electronic devices may be exposed to harsh environments, such as high humidity or air contamination. High humidity or polluted air may cause contamination or corrosion to various electronic components or lines in the inner space of electronic devices.

### [Detailed Description of the Invention]

### [Technical Problem]

Manufacturers may increase the reliability of electronic devices by equipping the electronic devices with dustproof and waterproof features to prevent internal contamination of electronic devices in everyday life environments. For example, it is possible to prevent moisture or foreign substances from entering from the outside by placing an adhesive member or a sealing member between two components that are mechanically joined. Some of the keys provided for user input may have a mechanical operating structure, and the waterproof structure may be exposed to the risk of damage in such a mechanical operating structure. For example, during the initial assembly process or during the process of disassembling or assembling for repair, the waterproofing structure may be damaged by interference with other structures.

Various embodiments of the disclosure may provide an electronic device capable of configuring a key assembly without changing the design of other components, utilizing a minimal space for applying a waterproof function.

However, the objects of the disclosure are not limited to the foregoing objects but rather may be expanded in various manners without departing from the scope of the disclosure.

### [Technical Solution]

An electronic device according to various embodiments of the disclosure may comprise a housing including an opening formed in one surface thereof and a first support member spaced apart from the one surface in a first direction and having at least a portion, a position of which corresponds to the opening, and a key assembly disposed between the opening and the first support member. The key assembly includey a second support member disposed on the first support member, a printed circuit board disposed on the second support member and including a switch, a waterproof bracket including a plate having a first surface facing in the first direction, the first surface facing the switch, and a second surface facing in a second direction opposite to the first direction, the second surface corresponding to the opening, and a protrusion protruding from the second surface of the plate in the second direction, and a cover member inserted into the opening to be coupled to the waterproof bracket. The protrusion includes at least one hook having a first size protruding in a direction perpendicular to the first direction. The cover member includes a hanging hole formed, in at least a portion of a side surface thereof. In particular, the technical problem mentioned above is solved in that the hanging hole is formed to have a second size larger than the first size so that the hook is insertable into the hanging hole, and a relative position of the hook is variable inside.

An electronic device according to various embodiments of the disclosure may comprise a housing including an opening formed in one surface thereof and a first support member spaced apart from the one surface in a first direction and having at least a portion, a position of which corresponds to the opening, and a key assembly disposed between the opening and the first support member. The key assembly may include a second support member disposed on the first support member, a printed circuit board disposed on the second support member and including a switch, a waterproof bracket including a plate having a first surface facing in the first direction, the first surface facing the switch, and a second surface facing in a second direction opposite to the first direction, the second surface corresponding to the opening, and a protrusion protruding from the second surface of the plate in the second direction, and a cover member inserted into the opening to be coupled to the waterproof bracket. The protrusion may include at least one hook protruding by a third length in a direction perpendicular to the first direction and formed to have a fourth length in the first direction from one end of the protrusion. The cover member may include a hanging hole formed, in at least a portion of a side surface thereof, to have a fifth size larger than the fourth size so that the hook is insertable into the hanging hole, and a relative position of the hook is variable inside.

### [Advantageous Effects]

An electronic device according to various embodiments of the disclosure is an invention related to a key assembly that applies a waterproof function utilizing a minimum space, wherein a cover member moves as the user pressurizes the key assembly, and the movement space of the cover member utilizes the space of the side housing itself, so there is no need to secure a separate space, which may help make the electronic device slimmer.

### [Brief Description of the Drawings]

FIG. 1 is a block diagram illustrating an electronic device in a network environment according to various embodiments of the disclosure;
FIG. 2 is a front perspective view illustrating an electronic device according to various embodiments of the disclosure;
FIG. 3 is a rear perspective view illustrating an electronic device according to various embodiments of the disclosure;
FIG. 4 is an exploded perspective view illustrating an electronic device according to various embodiments of the disclosure;
FIG. 5 is a view illustrating one surface of an electronic device where a key assembly is disposed inside according to various embodiments of the disclosure;
FIG. 6 is a cross-sectional view schematically illustrating the electronic device of FIG. 5, taken along line A-A' according to various embodiments of the disclosure;
FIG. 7 is an exploded perspective view illustrating a key assembly according to various embodiments of the disclosure;
FIGS. 8A and 8B are an exploded perspective view and a perspective view including a waterproof bracket of a key assembly according to various embodiments of the disclosure;
FIG. 9 is a perspective view illustrating a waterproof bracket including a sealing member of a key assembly according to an embodiment of the disclosure;
FIGS. 10A and 10B are perspective views illustrating a cover member of a key assembly according to various embodiments of the disclosure;
FIG. 11A is a view of a key assembly embedded in an electronic device, viewed from the front of the electronic device, when a cover member is not pressed from outside of the electronic device according to various embodiments of the disclosure;
FIG. 11B is a view of a key assembly embedded in an electronic device, viewed from a side surface of the electronic device, when a cover member is not pressed from outside of the electronic device according to various embodiments of the disclosure;
FIGS. 12A and 12B are cross-sectional views schematically illustrating the electronic device of FIG. 11A, taken along line B-B' according to various embodiments of the disclosure;
FIG. 13 is a cross-sectional view schematically illustrating the electronic device of FIG. 11A, taken along line C-C' according to various embodiments of the disclosure;
FIG. 14 is a cross-sectional view schematically illustrating the electronic device of FIG. 11B, taken along line D-D' according to various embodiments of the disclosure;
FIG. 15A is a view of a key assembly embedded in an electronic device, viewed from the front of the electronic device, when a cover member is pressed from outside of the electronic device according to various embodiments of the disclosure;
FIG. 15B is a view of a key assembly embedded in an electronic device, viewed from a side surface of the electronic device, when a cover member is pressed from outside of the electronic device according to various embodiments of the disclosure;
FIGS. 16A and 16B are cross-sectional views schematically illustrating the electronic device of FIG. 15A, taken along line B-B' according to various embodiments of the disclosure;
FIG. 17 is a cross-sectional view schematically illustrating the electronic device of FIG. 15A, taken along line C-C' according to various embodiments of the disclosure;
FIG. 18 is a cross-sectional view schematically illustrating the electronic device of FIG. 15B, taken along line D-D' according to various embodiments of the disclosure; and
FIGS. 19A, 19B, 19C, 19D, and 19E are views sequentially illustrating assembly of a key assembly.

### [Mode for Carrying out the Invention]

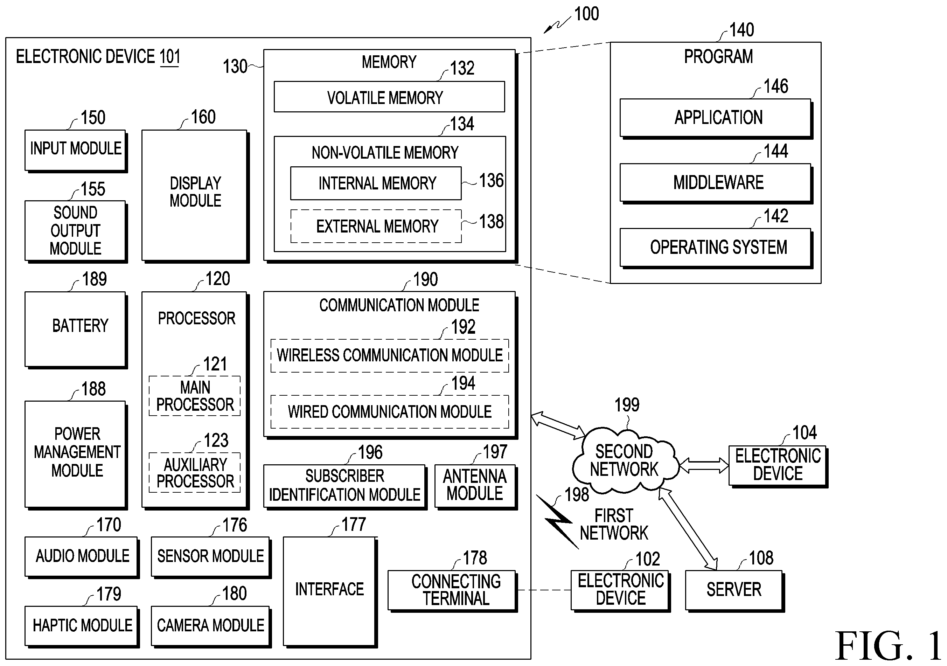

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

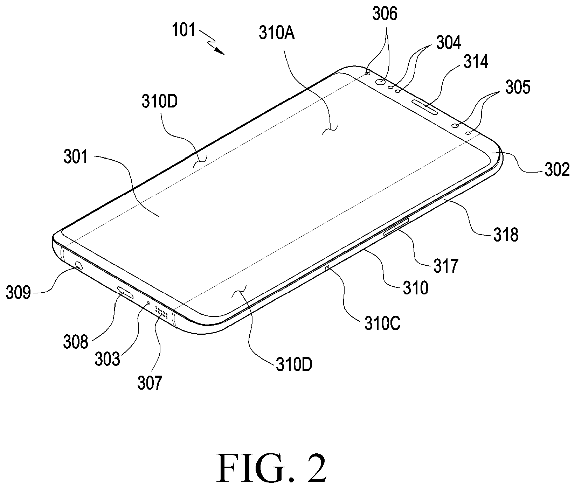

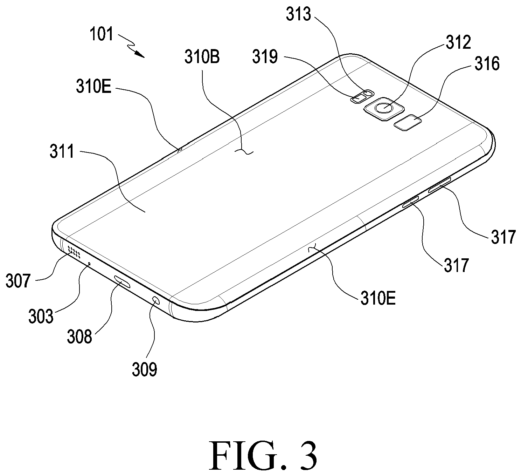

FIG. 2 is a front perspective view illustrating an electronic device 101 according to various embodiments of the disclosure. FIG. 3 is a rear perspective view illustrating an electronic device 101 according to an embodiment.

Referring to FIGS. 2 and 3, according to an embodiment, an electronic device 101 may include a housing 310 with a first (or front) surface 310A, a second (or rear) surface 310B, and a side surface 310C surrounding a space between the first surface 310A and the second surface 310B. According to another embodiment (not shown), the housing 310 may denote a structure forming part of the first surface 310A, the second surface 310B, and the side surface 310C of FIG. 2. According to an embodiment, at least part of the first surface 310A may have a substantially transparent front plate 302 (e.g., a glass plate or polymer plate including various coat layers). The second surface 310B may be formed of a substantially opaque rear plate 311. The rear plate 311 may be formed of, e.g., laminated or colored glass, ceramic, polymer, metal (e.g., aluminum, stainless steel (STS), or magnesium), or a combination of at least two thereof. The side surface 310C may be formed by a side bezel structure (or a "side member") 318 that couples to the front plate 302 and the rear plate 311 and includes a metal and/or polymer. According to an embodiment, the rear plate 311 and the side bezel plate 318 may be integrally formed together and include the same material (e.g., a metal, such as aluminum).

In the embodiment illustrated, the front plate 302 may include two first regions 310D, which seamlessly and bendingly extend from the first surface 310A to the rear plate 311, on both the long edges of the front plate 302. In the embodiment (refer to FIG. 3) illustrated, the rear plate 311 may include two second regions 310E, which seamlessly and bendingly extend from the second surface 310B to the front plate, on both the long edges. According to an embodiment, the front plate 302 (or the rear plate 311) may include only one of the first regions 310 (or the second regions 310E). Alternatively, the first regions 310D or the second regions 301E may partially be excluded. According to an embodiment, at side view of the electronic device 101, the side bezel structure 318 may have a first thickness (or width) for sides that do not have the first regions 310D or the second regions 310E and a second thickness, which is smaller than the first thickness, for sides that have the first regions 310D or the second regions 310E.

According to an embodiment, the electronic device 101 may include at least one or more of a display 301, audio modules 303, 307, and 314, sensor modules 304, 316, and 319, camera modules 305, 312, and 313, key input devices 317, a light emitting device 306, and connector holes 308 and 309. According to an embodiment, the electronic device 101 may exclude at least one (e.g., the key input device 317 or the light emitting device 306) of the components or may add other components.

According to an embodiment, the display 301 may be visually revealed through, e.g., a majority portion of the front plate 302. According to an embodiment, at least a portion of the display 301 may be exposed through the front plate 302 forming the first surface 310A and the first regions 310D of the side surface 310C. According to an embodiment, the edge of the display 301 may be formed to be substantially the same in shape as an adjacent outer edge of the front plate 302. According to another embodiment (not shown), the interval between the outer edge of the display 301 and the outer edge of the front plate 302 may remain substantially even to give a larger area of exposure the display 301.

According to an embodiment, the surface (or the front plate 302) of the housing 310 may include a screen display area formed as the display 301 is visually exposed. For example, the screen display area may include the front surface 310A and first areas 310D.

According to another embodiment (not shown), the screen display region of the display 301 may have a recess or opening in a portion thereof, and at least one or more of the audio module 314, sensor module 304, camera module 305, and light emitting device 306 may be aligned with the recess or opening. According to another embodiment (not shown), at least one or more of the audio module 314, sensor module 304, camera module 305, fingerprint sensor 316, and light emitting device 306 may be included on the rear surface of the screen display area of the display 301. According to an embodiment (not shown), the display 301 may be disposed to be coupled with, or adjacent, a touch detecting circuit, a pressure sensor capable of measuring the strength (pressure) of touches, and/or a digitizer for detecting a magnetic field-type stylus pen. According to an embodiment, at least part of the sensor modules 304 and 519 and/or at least part of the key input device 317 may be disposed in the first regions 310D and/or the second regions 310E.

According to an embodiment, the audio modules 303, 307, and 314 may include a microphone hole 303 and speaker holes 307 and 314. A microphone for acquiring external sounds may be disposed in the microphone hole 303. In some embodiments, a plurality of microphones may be disposed to detect the direction of the sound. The speaker holes 307 and 314 may include an external speaker hole 307 and a phone receiver hole 314. In an embodiment, the speaker holes 307 and 314 and the microphone hole 303 may be implemented as a single hole, or speakers may be included without the speaker holes 307 and 314 (e.g., piezo speakers).

According to an embodiment, the sensor modules 304, 316, and 319 may generate an electrical signal or data value corresponding to an internal operating state or external environmental state of the electronic device 101. The sensor modules 304, 316, and 319 may include a first sensor module 304 (e.g., a proximity sensor) and/or a second sensor module (not shown) (e.g., a fingerprint sensor) disposed on the first surface 310A of the housing 310 and/or a third sensor module 319 (e.g., a heart-rate monitor (HRM) sensor) and/or a fourth sensor module 316 (e.g., a fingerprint sensor) disposed on the second surface 310B of the housing 310. The fingerprint sensor may be disposed on the second surface 310B as well as on the first surface 310A (e.g., the display 301) of the housing 310. The electronic device 101 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor 304.

According to an embodiment, the camera modules 305, 312, and 313 may include a first camera device 305 disposed on the first surface 310A of the electronic device 101, and a second camera device 312 and/or a flash 313 disposed on the second surface 310B. The camera modules 305 and 312 may include one or more lenses, an image sensor, and/or an image signal processor. The flash 313 may include, e.g., a light emitting diode (LED) or a xenon lamp. According to an embodiment, two or more lenses (an infrared (IR) camera, a wide-angle lens, and a telescopic lens) and image sensors may be disposed on one surface of the electronic device 101.

According to an embodiment, the electronic device 101 may include a plurality of camera modules (e.g., a dual camera or triple camera) having different attributes (e.g., angle of view) or functions. For example, a plurality of camera modules 305 and 312 including lenses having different angles of view may be configured, and the electronic device 101 may control to change the angle of view of the camera modules 305 and 312 performed by the electronic device 101 based on the user's selection. At least one of the plurality of camera modules 305 and 312 may form, for example, a wide-angle camera and at least another of the plurality of camera modules may form a telephoto camera. Similarly, at least one of the plurality of camera modules 305 and 312 may be a front camera and at least another of the plurality of camera modules may be a rear camera. Further, the plurality of camera modules 305 and 312 may include at least one of a wide-angle camera, a telephoto camera, and an infrared (IR) camera (e.g., a time of flight (TOF) camera, a structured light camera). According to an embodiment, the IR camera may be operated as at least a portion of the sensor module. For example, the TOF camera may be operated as at least a portion of a sensor module (not shown) for detecting the distance to the subject.

According to an embodiment, the camera module 305 and/or the sensor module may be disposed to contact the external environment through a transparent area from the internal space of the electronic device 101 to the front plate 302 of the display 301. Further, some sensor module (not shown) may be disposed to perform its functions without being visually exposed through the front plate 302 in the internal space of the electronic device.

According to an embodiment, the key input device 317 may be disposed on the side surface 310C of the housing 310. According to an embodiment, the electronic device 101 may exclude all or some of the above-mentioned key input devices 317 and the excluded key input devices 317 may be implemented in other forms, e.g., as soft keys, on the display 301. According to an embodiment, the key input device 317 may include the sensor module 316 disposed on the second surface 310B of the housing 310.

According to an embodiment, the light emitting device 306 may be disposed on, e.g., the first surface 310A of the housing 310. The light emitting device 306 may provide, e.g., information about the state of the electronic device 101 in the form of light. According to an embodiment, the light emitting device 306 may provide a light source that interacts with, e.g., the camera module 305. The light emitting device 306 may include, e.g., a light emitting diode (LED), an infrared (IR) LED, or a xenon lamp.

The connector holes 308 and 309 may include a first connector hole 308 for receiving a connector (e.g., a universal serial bus (USB) connector) for transmitting or receiving power and/or data to/from an external electronic device and/or a second connector hole 309 (e.g., an earphone jack) for receiving a connector for transmitting or receiving audio signals to/from the external electronic device.

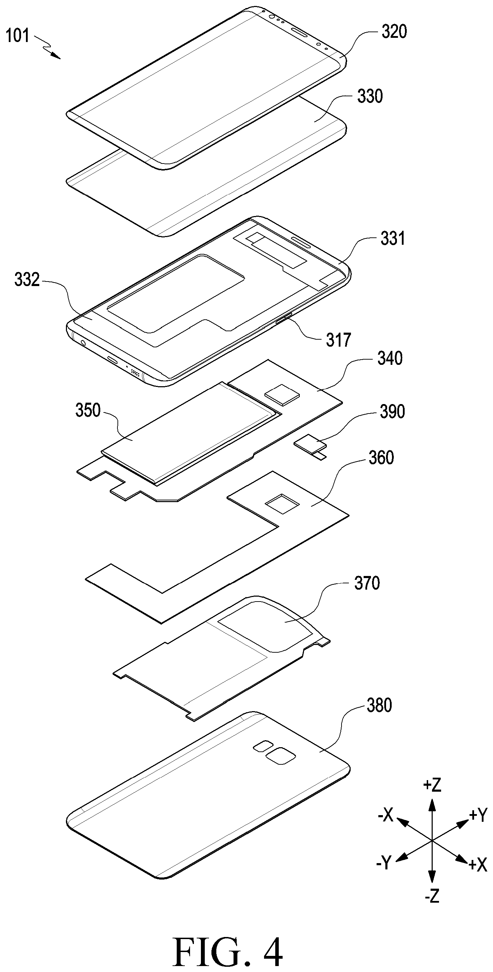

FIG. 4 is an exploded perspective view illustrating an electronic device 101 according to various embodiments.

Referring to FIG. 4, an electronic device 101 (e.g., the electronic device 101 of FIGS. 1 to 4) may include a side bezel structure 331, a first supporting member 332 (e.g., a bracket), a front plate 320, a display 330, a printed circuit board (PCB) 340, a battery 350, a second supporting member 360 (e.g., a rear case), an antenna 370, and a rear plate 380. According to an embodiment, the electronic device 101 may exclude at least one (e.g., the first supporting member 332 or the second supporting member 360) of the components or may add other components. At least one of the components of the electronic device 101 may be the same or similar to at least one of the components of the electronic device 101 of FIG. 1 to 3 and no duplicate description is made below.

According to an embodiment, the first supporting member 332 may be disposed inside the electronic device 101 to be connected with the side bezel structure 331 or integrated with the side bezel structure 331. The first supporting member 332 may be formed of, e.g., a metal and/or non-metallic material (e.g., polymer). The display 330 may be joined onto one surface of the first supporting member 332, and the printed circuit board 340 may be joined onto the opposite surface of the first supporting member 311. A processor, memory, and/or interface may be mounted on the printed circuit board 340. The processor may include one or more of, e.g., a central processing unit, an application processor, a graphic processing device, an image signal processing, a sensor hub processor, or a communication processor. According to an embodiment, the printed circuit board 340 may include a flexible printed circuit board type radio frequency cable (FRC). For example, the printed circuit board 340 may be disposed on at least a portion of the first supporting member 332 and may be electrically connected with an antenna module (e.g., the antenna module 197 of FIG. 1) and a communication module (e.g., the communication module 190 of FIG. 1).

According to an embodiment, the memory may include, e.g., a volatile or non-volatile memory.

According to an embodiment, the interface may include, e.g., a high definition multimedia interface (HDMI), a universal serial bus (USB) interface, a secure digital (SD) card interface, and/or an audio interface. The interface may electrically or physically connect, e.g., the electronic device 101 with an external electronic device and may include a USB connector, an SD card/multimedia card (MMC) connector, or an audio connector.

According to an embodiment, the battery 350 may be a device for supplying power to at least one component of the electronic device 101. The battery 189 may include, e.g., a primary cell which is not rechargeable, a secondary cell which is rechargeable, or a fuel cell. At least a portion of the battery 350 may be disposed on substantially the same plane as the printed circuit board 340. The battery 350 may be integrally or detachably disposed inside the electronic device 101.

According to various embodiments, the second supporting member 360 (e.g., a rear case) may be disposed between the printed circuit board 340 and the antenna 370. For example, the second supporting member 360 may include one surface to which at least one of the printed circuit board 340 and the battery 350 is coupled, and another surface to which the antenna 370 is coupled.

According to an embodiment, the antenna 370 may be disposed between the rear plate 380 and the battery 350. The antenna 370 may include, e.g., a near-field communication (NFC) antenna, a wireless charging antenna, and/or a magnetic secure transmission (MST) antenna. The antenna 370 may perform short-range communication with, e.g., an external device or may wirelessly transmit or receive power necessary for charging. According to an embodiment, an antenna structure may be formed by a portion or combination of the side bezel structure 331 and/or the first supporting member 332.

According to various embodiments of the disclosure, the electronic device may include a plurality of antenna modules 390. For example, some of the plurality of antenna modules 390 may be implemented to transmit or receive radio waves with different characteristics (referred to as radio waves of frequency bands A and B) to implement MIMO. As another example, some of the plurality of antenna modules 390 may be configured to transmit or receive radio waves with substantially the same characteristic (referred to as radio waves of frequencies A1 and A2 in frequency band A) to implement diversity. As another example, some of the plurality of antenna modules 390 may be configured to transmit or receive radio waves with substantially the same characteristic (referred to as radio waves of frequencies B1 and B2 in frequency band B) to implement diversity. According to an embodiment, two antenna modules may be included. Alternatively, the electronic device 101 may include four antenna modules to implement both MIMO and diversity. According to another embodiment, the electronic device 101 may include only one antenna module 390.

According to an embodiment, given the transmission and reception nature of radio waves, when one antenna module is disposed in a first position of the printed circuit board 340, another antenna module may be disposed in a second position, which is separated from the first position, of the printed circuit board 340. As another example, one antenna module and another antenna module may be disposed considering the distance therebetween depending on diversity characteristics.

According to an embodiment, at least one antenna module 390 may include a wireless communication circuit to process radio waves transmitted or received in an ultra-high frequency band (e.g., 6GHz or more and 300GHz or less). The conductive plate of the at least one antenna module 390 may be formed of a dipole-structured conductive plate extending in one direction or a patch-type radiating conductor. A plurality of conductive plates may be arrayed to form an antenna array. A chip (e.g., an integrated circuit (IC) chip) in which part of the wireless communication circuit is implemented may be disposed on the opposite surface of the surface where the conductive plate is disposed or on one side of the area where the conductive plate is disposed and may be electrically connected with the conductive plate via a line which is formed of a printed circuit pattern.

The electronic device 101 disclosed in the disclosure has a bar-type or plate-type appearance but the disclosure is not limited thereto. For example, the illustrated electronic device 101 may be a rollable electronic device or a foldable electronic device. As the display is stretched out or is exposed to the outside in a larger area according to the user's need, the rollable electronic device or foldable electronic device may use an expanded second display area. In some embodiments, according to various embodiments of the disclosure, the electronic device 101 may be interpreted as including various electronic devices, such as a laptop computer or a camera, as well as a portable electronic device, such as a smart phone.

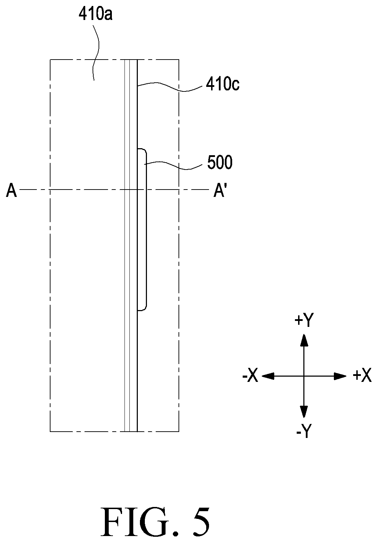

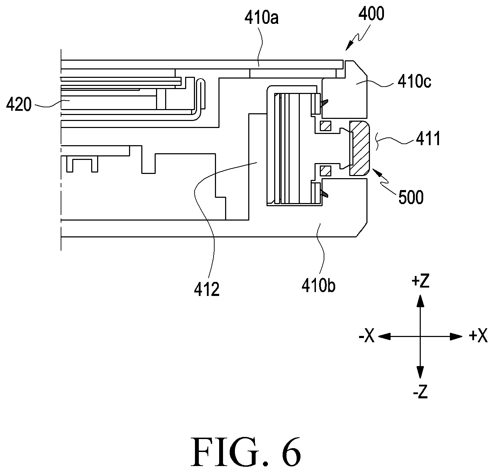

FIG. 5 is a view illustrating one surface of an electronic device 400 where a key assembly 500 is disposed inside according to various embodiments of the disclosure. FIG. 6 is a cross-sectional view schematically illustrating the electronic device 400 of FIG. 5, taken along line A-A' according to various embodiments of the disclosure.

Referring to FIGS. 5 and 6, an electronic device 400 may include a housing 410, a display 420, and a key assembly 500. The configuration of the electronic device 400, the housing 410, the display 420, and the key assembly 500 of FIGS. 5 and 6 may be identical in whole or part to the configuration of the electronic device 101, the housing 310, the display 301, and the key input device 317 of FIGS. 2 to 4.

In FIGS. 5 and 6, 'X' may be defined and interpreted as a width direction of the electronic device 400, 'Y' may be defined and interpreted as a length direction of the electronic device 400, and 'Z' may be defined and interpreted as a thickness direction of the electronic device 400. In an embodiment of the present invention, 'X' may mean a 1-1th direction (+X direction) and a 1-2th direction (-X direction). In an embodiment of the present invention, 'Y' may mean a 2-1th direction (+Y direction) and a 2-2th direction (-Y direction). In an embodiment of the present invention, 'Z' may mean a 3-1th direction (+Z direction) and a 3-2th direction (-Z direction).

According to various embodiments, the housing 410 of the electronic device 400 may include a front surface 410a, a rear surface 410b, and a side surface 410c surrounding a space between the front surface 410a and the rear surface 410b. In another embodiment (not illustrated), the housing 410 may refer to a structure forming the front surface 410a, the rear surface 410b, and some of the side surfaces 410c. The side surface 410c may be coupled to the front surface 410a and the rear surface 410b, and may be formed by a side bezel structure (or a "side member") (not illustrated) including a metal and/or a polymer. In an embodiment, the rear surface 410b and the side bezel structure (not illustrated) may be integrally formed and may include the same material (e.g., a metal material such as aluminum).

According to various embodiments, the side surface 410c of the housing 410 may include an opening 411 formed in at least one surface thereof, and a first support member 412 formed to be spaced apart from the one surface in the 1-2th direction (-X direction). The first support member 412 may be formed to extend from one surface of the housing 410 to the inside. For example, the first support member 412 may be formed to extend from the side surface 410c of the housing 410 in the 1-2th direction (-X direction). According to an embodiment, the first support member 412 may be integrally formed with the housing 410. According to an embodiment, the first support member 412 may be formed by being coupled to and/or assembled with the housing 410. However, the structure and manufacturing method of the first support member 412 are not limited to the above-described embodiment, and various changes may be made to the design. The shape and size of the opening 411 may correspond to the shape and size of the cover member of the key assembly 500 to be described below. The position of at least a portion of the first support member 412 may correspond to the opening 411. The first support member 412 may contact the key assembly 500 to be described below and may support the key assembly 500.

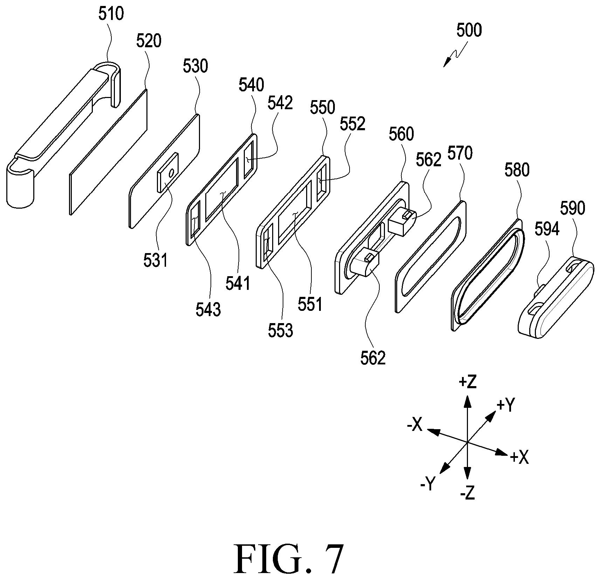

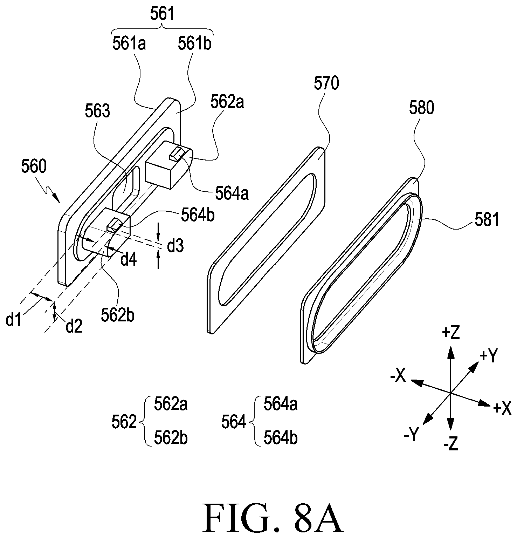

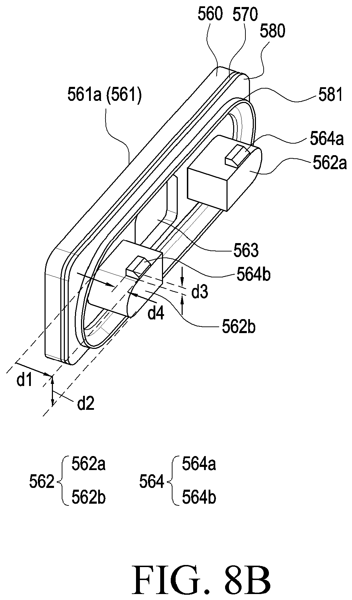

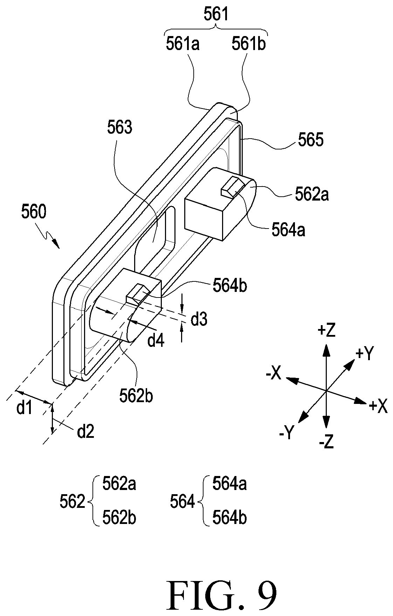

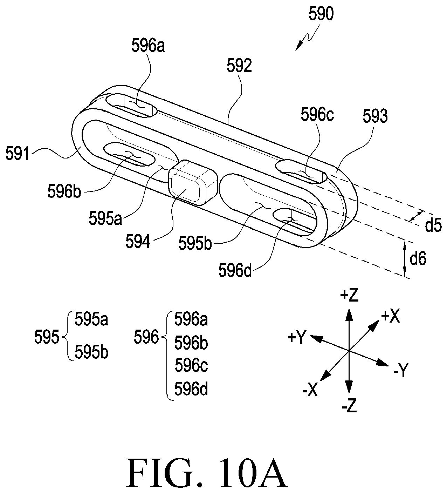

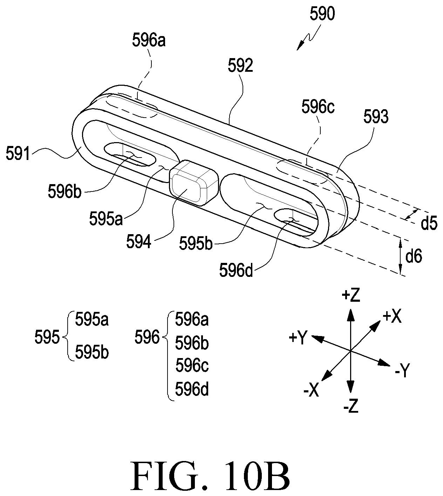

FIG. 7 is an exploded perspective view illustrating a key assembly 500 according to various embodiments of the disclosure. FIGS. 8A and 8B are an exploded perspective view and a perspective view including a waterproof bracket 560 of a key assembly 500 according to various embodiments of the disclosure. FIG. 9 is a perspective view illustrating a waterproof bracket 560 including a sealing member of a key assembly 500 according to an embodiment of the disclosure. FIGS. 10A and 10B are perspective views illustrating a cover member 590 of a key assembly 500 according to various embodiments of the disclosure.

Referring to FIGS. 7 to 10, a key assembly 500 may include a second support member 510, a third support member 520, a printed circuit board 530, a first adhesive member 540, a first sealing member 550, a waterproof bracket 560, a second adhesive member 570, a second sealing member 580, and a cover member 590. The configuration of the key assembly 500 of FIGS. 7 to 10 may be identical in whole or part to the configuration of the key assembly 500 of FIGS. 5 and 6.

In FIGS. 7 to 10, 'X' may be defined and interpreted as a width direction of the electronic device 400, 'Y' as a length direction of the electronic device 400, and 'Z' as a thickness direction of the electronic device 400. In an embodiment of the present invention, 'X' may mean a 1-1th direction (+X direction) and a 1-2th direction (-X direction). In an embodiment of the present invention, 'Y' may mean a 2-1th direction (+Y direction) and a 2-2th direction (-Y direction). In an embodiment of the present invention, 'Z' may mean a 3-1th direction (+Z direction) and a 3-2th direction (-Z direction).

According to various embodiments, the second support member 510 may be disposed on the first support member (e.g., the first support member 412 of FIG. 6). The second support member 510 may support at least a portion of the structure of the key assembly 500. For example, the second support member 510 may be formed to surround at least a portion of the key assembly 500 on at least two surfaces thereof. For example, the second support member 510 may include one surface of the key assembly 500 facing in the 1-2th direction (-X direction) and one surface of the key assembly 500 facing in the 3-1th direction (+Z direction). For example, the second support member 510 may be formed to surround the key assembly 500 on at least four surfaces thereof. For example, the second support member 510 may include one surface of the key assembly 500 facing in the 3-1th direction (+Z direction), one surface of the key assembly 500 facing in the 1-2th direction (-X direction), one surface of the key assembly 500 facing in the 2-1th direction (+Y direction), and one surface of the key assembly 500 facing in the 2-2th direction (-Y direction). For example, one surface facing in the 2-1th direction (+Y direction) and one surface facing in the 2-2th direction (-Y direction) may be curved surfaces. However, the shape and structure of the second support member 510 are not limited to the above-described embodiment, and various changes may be made to the design depending on the size or arrangement relationship of the surrounding structure.

According to various embodiments, the printed circuit board 530 may be disposed on one surface of the second support member 510. The printed circuit board 530 may be disposed between the second support member 510 and the opening 411. According to various embodiments, the printed circuit board 530 may include a switch 531 at a central portion of one surface facing in the 1-1th direction (+X direction). The switch 531 may be electrically connected to the printed circuit board 530 through wiring or a printed circuit pattern formed on the printed circuit board 530. The switch 531 may be formed at a position corresponding to a pressing portion 594 of the cover member 590 to be described below. When the user presses the cover member 590 to be described below, the switch 531 corresponding to the pusher 594 may be pressed to perform a designated operation.

According to various embodiments, the key assembly 500 may further include a third support member 520 supporting the printed circuit board 530 between the second support member 510 and the printed circuit board 530. The shape of the third support member 520 may substantially correspond to the printed circuit board 530.

According to various embodiments, the key assembly 500 may further include a first adhesive member 540 and/or a first sealing member 550 disposed on the printed circuit board 530 and supporting the printed circuit board 530. The key assembly 500 may further include a first adhesive member 540 on the printed circuit board 530. The first adhesive member 540 may be, e.g., an adhesive member such as a double-sided tape (e.g., PET double-sided tape) or a liquid adhesive. The first adhesive member 540 may include a hole in at least a portion thereof. For example, a 1-1th hole 541 formed to penetrate the central portion may be included. The 1-1th hole 541 of the first adhesive member 540 may be formed at a position corresponding to the switch 531 disposed on the printed circuit board 530. The switch 531 disposed on the printed circuit board 530 may pass through the 1-1th hole 541. The first adhesive member 540 may include a plurality of supports on two opposite sides of the 1-1th hole 541. The plurality of supports may be disposed at a position corresponding to the protrusion 562 of the waterproof bracket 560 to be described below. Accordingly, the shape of the waterproof bracket 560 may not be bent or deformed by the pressure applied to the protrusion 562. The first adhesive member 540 may further include a plurality of holes by the plurality of supports. For example, a 1-2th hole 542 positioned in the 2-1th direction (+Y direction) of the 1-1th hole 541 and a 1-3th hole 543 positioned in the 2-2th direction (-Y direction) of the 1-1th hole 541 may further be included.

According to various embodiments, the key assembly 500 may further include a first sealing member 550 for waterproofing on the printed circuit board 530. The first sealing member 550 may be formed of an elastic material. The first sealing member 550 may be formed of, e.g., at least one of urethane, silicone, and rubber. The first sealing member 550 may include a hole in at least a portion thereof. For example, a 2-1th hole 551 formed to penetrate the central portion may be included. The 2-1th hole 551 of the first sealing member 550 may be formed at a position corresponding to the switch 531 disposed on the printed circuit board 530. The switch 531 disposed on the printed circuit board 530 may pass through the 2-1th hole 551. The first sealing member 550 may include a plurality of supports on two opposite sides of the 2-1th hole 551. The plurality of supports may be disposed at a position corresponding to the protrusion 562 of the waterproof bracket 560 to be described below. Accordingly, the shape of the waterproof bracket 560 may not be bent or deformed by the pressure applied to the protrusion 562. The first adhesive member 540 may further include a plurality of holes by the plurality of supports. For example, the 2-2th hole 552 positioned in the 2-1th direction (+Y direction) of the 2-1th hole 551 and the 2-3th hole 553 positioned in the left direction of the 2-1th hole 551 may be included.

According to various embodiments, the waterproof bracket 560 may be disposed on the printed circuit board 530. The waterproof bracket 560 may be disposed between the printed circuit board 530 and the opening 411. For example, the waterproof bracket 560 may be disposed on the first adhesive member 540 and/or the first sealing member 550 disposed on the printed circuit board 530.

According to various embodiments, the waterproof bracket 560 may include a plate 561 including a first surface 561a facing in a 1-2th direction (-X direction) and a second surface 561b facing in a 1-1th direction (+X axis direction), a protrusion 562 protruding from the second surface 561b in the 1-1th direction (+X axis direction), and a concave portion 563 recessed from the second surface 561b in the 1-2th direction (-X axis direction).

According to various embodiments, the first surface 561a may face the switch 531 of the printed circuit board 530. The first surface 561a may contact the switch 531 of the printed circuit board 530. At least a portion of the second surface 561b of the waterproof bracket 560 may contact the cover member 590. For example, at least a portion of the second surface 561b of the waterproof bracket 560 may contact the pressing portion 594 of the cover member 590.

According to various embodiments, the waterproof bracket 560 may further include a protrusion 562 protruding from the second surface 561b in the 1-1th direction (+X-axis direction). The protrusion 562 may be formed on the second surface 561b. There may be a plurality of protrusions 562. The protrusions 562 may include a first protrusion 562a formed on one side of the waterproof bracket 560 and a second protrusion 562b formed on the other side. For example, when viewed in the X-axis direction, the waterproof bracket 560 may include a first protrusion 562a formed in the 2-1th direction (+Y direction) and a second protrusion 562b formed in the 2-2th direction (-Y direction) with respect to a central portion of the waterproof bracket 560. The protrusion 562 may be formed to protrude from the second surface 561b by a first length d1 in the 1-2th direction (+X direction). The protrusion 562 may be formed to have a second length d2 in the thickness direction (Z-axis direction). The size and shape of the protrusion 562 may correspond to the recess portion 595 of the cover member 590 to be described below. The size of the protrusion 562 may be formed to be smaller than the recess space of the recess portion 595 so that the protrusion 562 may be inserted into and/or coupled to the recess portion 595.

According to various embodiments, the protrusion 562 may form at least one hook 564. The hook 564 may protrude from the side surface of the protrusion 562 in a direction perpendicular to the X-axis direction. For example, the hook 564 may be formed to protrude in the 3-1th direction (+Z direction) from one surface facing in the 3-1th direction (+Z direction) among the side surfaces of the protrusion 562. For example, the hook 564 may be formed to protrude in the 3-2th direction (-Z direction) from one surface facing in the 3-2th direction (-Z direction) among the side surfaces of the protrusion 562. The hook may be formed in a first size. The first size may be smaller than a second size of the hooked hole 596 of the cover member 590 to be described below. For example, the hook 564 may protrude in the thickness direction (Z-axis direction) by a third length d3. The hook may be formed to have a fourth length d4 in the X-axis direction. The hook 564 may have an inclination on one surface thereof to be easily fixed to the hooked hole 596 of the cover member 590. For example, an inclination may be formed so that the height (Z-axis direction) of one surface facing in the cover member 590 is decreased. The height in the Z-axis direction of one surface facing in the 1-2th direction (-X direction) and the height in the Z-axis direction of one surface facing in the 1-1th direction (+X direction) may be different. For example, the height in the Z-axis direction of one surface facing in the 1-1th direction (+X direction) may be lower than the third length d3, which is the height in the Z-axis direction of one surface facing in the 1-2th direction (-X direction). The hook 564 may be stuck to the hooked hole 596 of the cover member 590, which is described below, to fix or operate the position of the cover member 590. There may be provided a plurality of hooks 564. For example, there may be included a hook formed in the 3-1th direction (+Z direction) and a hook formed in the 3-2th direction (-Z direction). For example, the first protrusion 562a may include a 1-1th hook 564a protruding in the 3-1th direction (+Z direction) and a 1-2th hook 564c protruding in the 3-2th direction (-Z direction). For example, the second protrusion 562b may include a 2-1th hook 564b protruding in the 3-1th direction (+Z direction) and a 2-2th hook (not illustrated) protruding in the 3-2th direction (-Z direction).

According to various embodiments, a concave portion 563 may be formed between the first protrusion 562a and the second protrusion 562b. The concave portion 563 may correspond in position to the switch 531 of the printed circuit board 530 when viewed in the X-axis direction. The concave portion 563 may correspond in position to the pressing portion 594 of the cover member 590 when viewed in the X-axis direction. The waterproof bracket 560 may form a concave portion 563 having a small thickness so that the pressure applied to the cover member 590 is easily transferred to the switch 531. According to an embodiment, the concave portion 563 may be formed by being recessed from one surface of the waterproof bracket 560. For example, the concave portion 563 may be formed by being recessed from the second surface 561b of the waterproof bracket 560 in the 1-2th direction (-X direction). However, the shape and recess direction of the concave portion 563 are not limited to the above-described embodiment, and various changes may be made to the design depending on the relationship with other components.

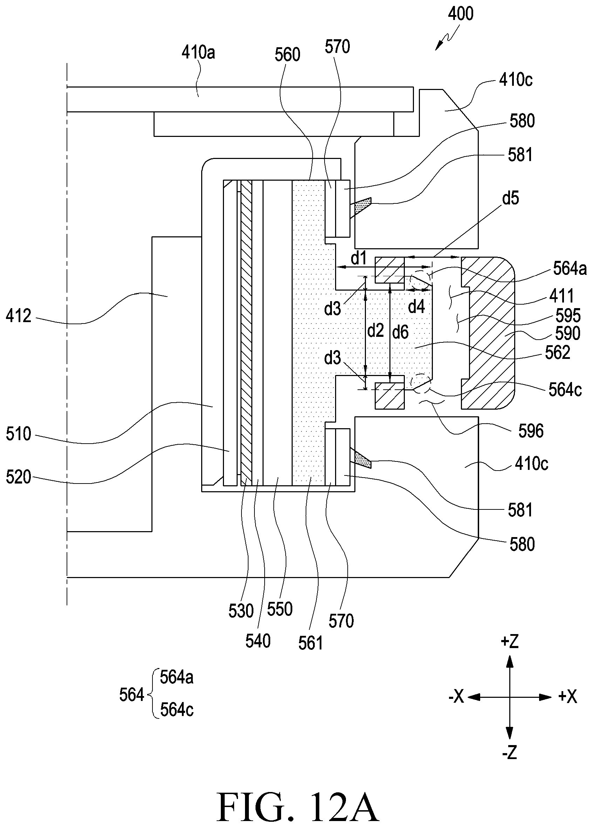

According to various embodiments, referring to FIGS. 8A and 8B, the key assembly 500 may further include a second sealing member 580 for waterproofing on the waterproof bracket 560 and/or a second adhesive member 570 disposed between the second sealing member 580 and the waterproof bracket 560. According to various embodiments, the key assembly 500 may further include a second sealing member 580 for waterproofing on the waterproof bracket 560. The second sealing member 580 may be formed of an elastic material. The second sealing member 580 may be formed of, e.g., at least one of urethane, silicone, and rubber. The second sealing member 580 may have a ring shape. For example, the second sealing member 580 may have a ring shape having an edge portion corresponding to the waterproof bracket 560 and a hole formed therein. One surface of the second sealing member 580 facing in the 1-1th direction (+X direction) may include a protruding slit 581 protruding in the 1-1th direction (+X direction). The second sealing member 580 may contact the side surface 410c surrounding the opening 411 of the housing 410 to perform a waterproof function of protecting the electronic device 400 from foreign substances such as water entering the electronic device 400 through the opening 411 from the outside of the electronic device 400. The protruding slit 581 of the second sealing member 580 may contact and overlap the side surface 410c of the housing 410, enhancing the waterproof function (see FIG. 12A).

According to various embodiments, the second adhesive member 570 may be disposed between the second sealing member 580 and the waterproof bracket 560 to attach the second sealing member 580 and the waterproof bracket 560. The second adhesive member 570 may be, e.g., an adhesive material such as a double-sided tape (e.g., PET double-sided tape) or a liquid adhesive. The second adhesive member 570 may have a ring shape. For example, the second adhesive member 570 may have a ring shape having an edge portion corresponding in shape to the waterproof bracket 560 and a hole formed therein. The shape of the second adhesive member 570 may correspond to the shape of the second sealing member 580.

According to an embodiment, referring to FIG. 9, the waterproof bracket 560 may be integrally formed with the sealing member. The waterproof bracket 560 may include a waterproof portion and a sealing portion. The sealing member may refer to a structure forming a sealing portion of the waterproof bracket 560. According to an embodiment, the waterproof bracket 560 may contact the second surface 561b and may further include a third sealing member 565 for waterproofing.

According to an embodiment, the waterproof bracket 560 may be formed of an elastic material such as urethane. The waterproof bracket 560 including an elastic material may be deformed. For example, the waterproof bracket 560 may be deformed in a state in which the user presses the cover member 590, and may be restored in the original state in which the user does not press the cover member 590. According to an embodiment, the third sealing member 565 may be formed of an elastic material. The third sealing member 565 may be formed of, e.g., at least one of urethane, silicone, and rubber. The third sealing member 565 may be formed of, e.g., silicone. The third sealing member 565 may have a ring shape. For example, the third sealing member 565 may have a ring shape having an edge portion corresponding to the waterproof bracket 560 and a hole formed therein. The third sealing member 565 may contact the side surface 410c surrounding the opening 411 of the housing 410 to perform a waterproof function of protecting the electronic device 400 from foreign substances such as water entering the electronic device 400 through the opening 411 from the outside of the electronic device 400. According to an embodiment, the waterproof bracket 560 and the third sealing member 565 may be manufactured through a double injection molding method. For example, the waterproof bracket 560 may be formed through insert double injection molding. For example, the third sealing member 565 including a sealing material such as silicone may be formed on the second surface 561b of the waterproof bracket 560 through double injection molding.

According to various embodiments, the waterproof bracket 560 may not flow depending on whether the user presses the key assembly 500, i.e., external pressure. Accordingly, since it is not necessary to secure a moving space of the waterproof bracket 560, the internal mounting area of the electronic device 400 may be reduced.

According to various embodiments, the cover member 590 may be inserted into the opening 411 of the housing 410 from the outside of the electronic device 400 and may be coupled to the waterproof bracket 560 inside the housing 410. According to various embodiments, the cover member 590 may include a first surface 591 facing in a 1-2th direction (-X direction), a second surface 592 facing in a 1-1th direction (+X direction), a third surface 593 connecting the first surface 591 and the second surface 592, a pressing portion 594 formed to protrude from the first surface 591 in the 1-2th direction (-X direction), a recess portion 595 recessed from the first surface 591 in the 1-1th direction (+X direction), and a hooked hole 596 formed through at least a portion of the third surface 593. The cover member 590 may be integrally formed, and may be formed by coupling and/or assembling at least a portion of each component. For example, the cover member 590 may be integrally formed with the pressing portion 594. For example, the pressing portion 594 may be coupled to the first surface 591 of the cover member 590. However, the configuration and manufacturing method of the cover member 590 are not limited to the above-described embodiment, and various changes may be made to the design.

According to various embodiments, the pressing portion 594 may be formed at a central portion of the first surface 591 of the cover member 590. The pressing portion 594 may be disposed at a position corresponding to the switch 531 of the printed circuit board 530 when viewed from the X-axis. The pressing portion 594 may be disposed at a position corresponding to the concave portion 563 of the waterproof bracket 560 when viewed from the X-axis. When the user presses the second surface 592 of the cover member 590, the pressing portion 594 may press the switch 531 of the printed circuit board 530 disposed to correspond to the 1-2th direction (-X direction) while the cover member 590 moves in the 1-2th direction (-X direction). The pressing portion 594 may be integrally formed with the cover member 590, and may be formed by coupling and/or assembling the pressing portion 594 to the first surface 591 of the cover member 590. However, the configuration and manufacturing method of the pressing portion 594 are not limited to the above-described embodiment, and various changes may be made to the design.

According to an embodiment, the pressing portion 594 may include an injection-molded material such as plastic or urethane. However, the material of the pressing portion 594 is not limited to the above-described embodiment, and the design may be changed to a material that relieves the fatigue life of the switch through insert injection molding.

According to various embodiments, a recess portion 595 may be formed next to the pressing portion 594 to receive the protrusion 562 of the waterproof bracket 560. For example, the recess portion 595 may include a first recess portion 595a and a second recess portion 595b on two opposite sides of the pressing portion 594. For example, the recess portion 595 may include a first recess portion 595a disposed in the 2-1th direction (+Y direction) of the pressing portion 594, and a second recess portion 595b disposed in the 2-2th direction (-Y direction). The recess portion 595 may be recessed by a designated length (not illustrated) in the 1-1th direction (+X direction). The shape and size of the recess portion 595 may correspond to the shape and size of the protrusion 562 of the waterproof bracket 560. The recessed space in the recess portion 595 may be formed to have a sixth length d6 in the thickness direction (Z-axis direction). The sixth length d6 may be larger than the second length d2 of the protrusion 562, and may be smaller than the length d2+d3+d3 in the thickness direction (Z-axis direction) including the hook 564 formed on the protrusion 562. Accordingly, the protrusion 562 may be received in the recess portion 595, and the hook 564 of the protrusion 562 may be hooked to maintain the state in which the waterproof bracket 560 and the cover member 590 are coupled.

According to various embodiments, referring to FIG. 10A, the hanging hole 596 may be a hole formed through the third surface 593 that is a side surface of the cover member 590. The hanging hole 596 may be substantially connected to the recess portion 595 through the third surface 593. According to an embodiment, referring to FIG. 10B, the hanging hole 596 may be at least partially recessed from the inner surface of the third surface 593, which is the side surface of the cover member 590, toward the outer surface. The structure and shape of the hanging hole 596 are not limited to the above-described embodiment, and various structures and shapes in which the hook 564 may be hooked may be adopted. The hanging hole 596 may be disposed within the thickness of the side surface 410c of the housing 410. The hanging hole 596 may be formed so that the hook 564 of the protrusion 562 may be hooked. The hook 564 of the protrusion 562 may be inserted into the hanging hole 596. The hanging hole 596 may be formed in a second size larger than the first size of the hook 564 so that a relative position of the hook 564 may be changed in the hanging hole 596. The second size may be, e.g., a fifth length d5 larger than the fourth length d4 of the hook. For example, the fifth length d5 of the hanging hole 596 may be a length including the fourth length d4 of the hook 564 and a relative movement distance of the hook 564 within the hanging hole 596 so that the relative position of the hook 564 within the hanging hole 596 may be changed. As the user presses the cover member 590, the cover member 590 may move in the x-axis direction, and the hanging hole 596 may move in a state in which the hook 564 is inserted. As the user presses the cover member 590, the arrangement relationship between the hook 564 and the hanging hole 596 may change.

According to various embodiments, a plurality of hanging holes 596 may be formed. The plurality of hanging holes 596 may be arranged in a longer axis of the cover member 590. For example, they may be arranged in the Y-axis direction (e.g., the Y-axis direction of FIG. 10A) that is the length direction of the electronic device 400. For example, four hanging holes may be formed. For example, the electronic device may include a first hanging hole 596a penetrating from the first recess portion 595a in the 3-1th direction (+Z direction) and formed in the third surface 593, a second hanging hole 596b penetrating from the first recess portion 595a in the 3-2th direction (-Z direction) and formed in the third surface 593, a third hanging hole 596c penetrating from the second recess portion 595b in the 3-1th direction (+Z direction) and formed in the third surface 593, and a fourth hanging hole 596d penetrating from the second recess portion 595b in the 3-2th direction (-Z direction) and formed in the third surface 593.

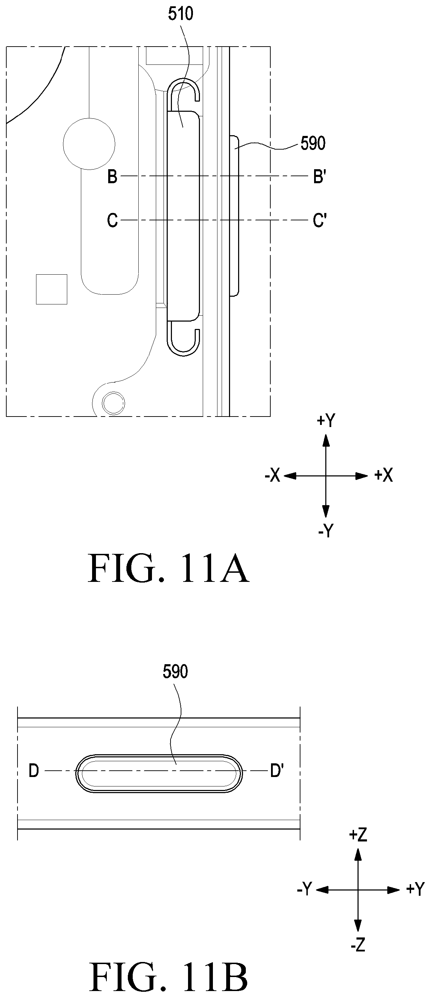

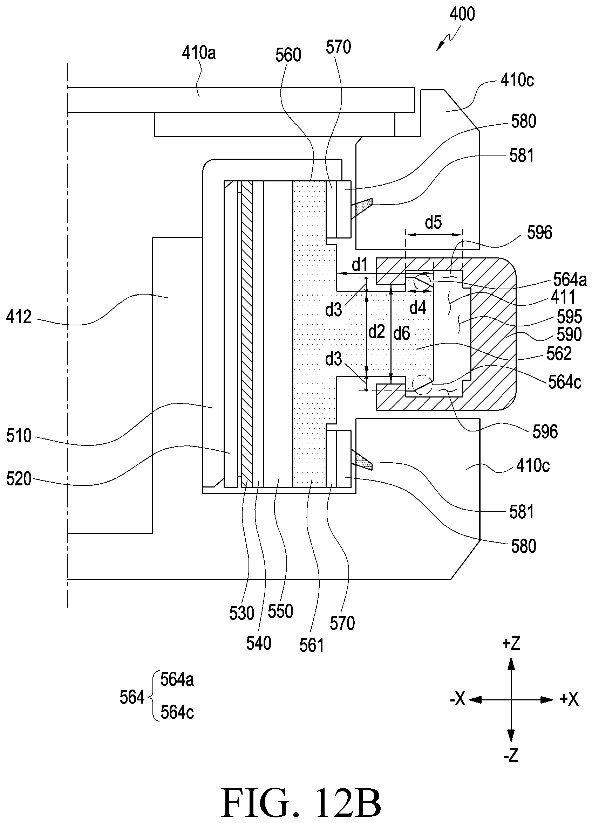

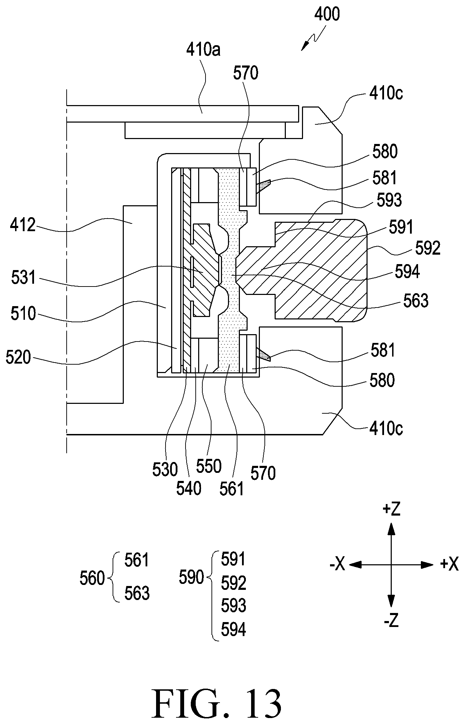

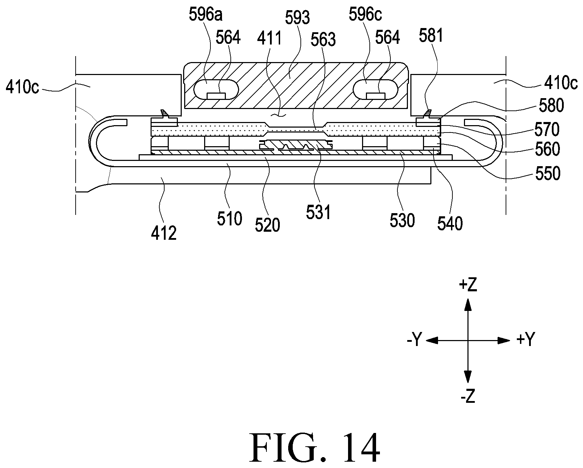

FIG. 11A is a view of a key assembly 500 embedded in an electronic device 400, viewed from the front of the electronic device 400, when a cover member 590 is not pressed from outside of the electronic device 400 according to various embodiments of the disclosure. FIG. 11B is a view of a key assembly 500 embedded in an electronic device 400, viewed from a side surface of the electronic device 400, when a cover member 590 is not pressed from outside of the electronic device 400 according to various embodiments of the disclosure. FIGS. 12A and 12B are cross-sectional views schematically illustrating the electronic device 400 of FIG. 11A, taken along line B-B' according to various embodiments of the disclosure. FIG. 13 is a cross-sectional view schematically illustrating the electronic device 400 of FIG. 11A, taken along line C-C' according to various embodiments of the disclosure. FIG. 14 is a cross-sectional view schematically illustrating the electronic device 400 of FIG. 11B, taken along line D-D' according to various embodiments of the disclosure.

Referring to FIGS. 11A to 14, a key assembly 500 may include a second support member 510, a third support member 520, a printed circuit board 530, a first adhesive member 540, a first sealing member 550, a waterproof bracket 560, a second adhesive member 570, a second sealing member 580, and a cover member 590. The configuration of the key assembly 500 of FIGS. 11A to 14 may be identical in whole or part to the configuration of the key assembly 500 of FIGS. 7 to 10.

In FIGS. 11A to 14, 'X' may be defined and interpreted as a width direction of the electronic device 400, 'Y' as a length direction of the electronic device 400, and 'Z' as a thickness direction of the electronic device 400. In an embodiment of the present invention, 'X' may mean a 1-1th direction (+X direction) and a 1-2th direction (-X direction). In an embodiment of the present invention, 'Y' may mean a 2-1th direction (+Y direction) and a 2-2th direction (-Y direction). In an embodiment of the present invention, 'Z' may mean a 3-1th direction (+Z direction) and a 3-2th direction (-Z direction).

According to various embodiments, FIGS. 11A to 14 are views illustrating the structure of the key assembly 500 when the cover member 590 is not pressed outside the electronic device 400.

According to various embodiments, FIG. 12A is a cross-sectional view of the electronic device 400 including the cover member 590 of FIG. 10A. FIG. 12B is a cross-sectional view of the electronic device 400 including the cover member 590 of FIG. 10B. According to various embodiments, referring to FIGS. 12A and 12B, the waterproof bracket 560 and the cover member 590 may be coupled to each other. The protrusion 562 of the waterproof bracket 560 may be inserted into and/or coupled to the recess portion 595 of the cover member 590. The plurality of hooks 564 formed on the protrusion 562 of the waterproof bracket 560 may be inserted into the recess portion 595 of the cover member 590 and may be inserted into the hanging hole 596 connected to the recess portion 595. The length of the recess portion 595 in the thickness direction (Z-axis direction) is the sixth length d6 as described above. The sixth length d6 may be longer than the second length d2, which is a length in the thickness direction (Z-axis direction) of the protrusion 562. The sixth length d6 may be shorter than the length d2+d3+d3 in the thickness direction (Z-axis direction) including the hook portion 564 of the protrusion 562. The cover member 590 may be fixed as the hook 564 of the protrusion 562 is hooked to the inner surface of the recess portion 595. For example, the cover member 590 may not move in the 1-1th direction (+X direction). For example, the cover member 590 may be caught by the hook 564 of the waterproof bracket 560 and may remain coupled to the waterproof bracket 560 without escaping off the electronic device. The hanging hole 596 may be disposed between the openings 411 formed in the side surface 410c of the housing 410. The hanging hole 596 may be disposed within the thickness of the side surface 410c of the housing 410.

According to various embodiments, referring to FIG. 13, the central portion of the key assembly 500 may correspond to the switch 531 of the printed circuit board 530, the concave portion 563 of the waterproof bracket 560, and the pressing portion 594 of the cover member 590 in the position in the X-axis direction. The switch 531 of the printed circuit board 530 may contact the concave portion 563 of the waterproof bracket 560. The concave portion 563 of the waterproof bracket 560 may contact the pressing portion 594 of the cover member 590.

According to various embodiments, referring to FIG. 14, the hook portion 564 of the waterproof bracket 560 may be positioned at a lower side of the hanging hole 596 of the cover member 590. The hook portion 564 of the waterproof bracket 560 may contact a lower surface of the hanging hole 596 of the cover member 590.

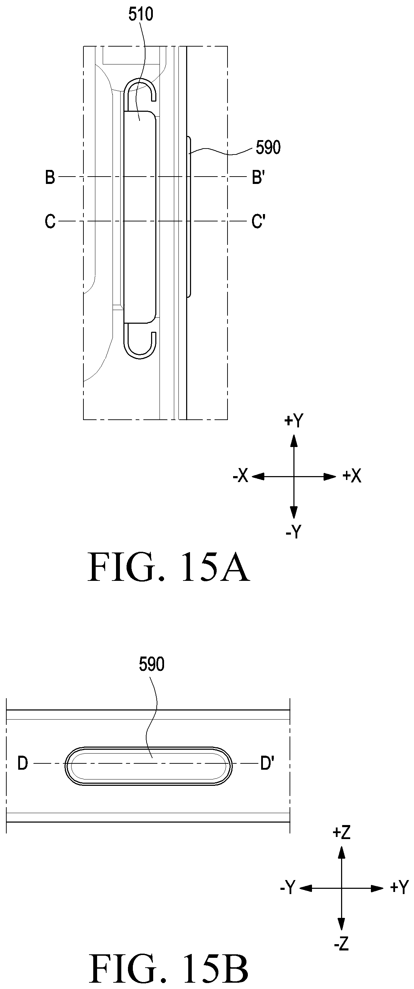

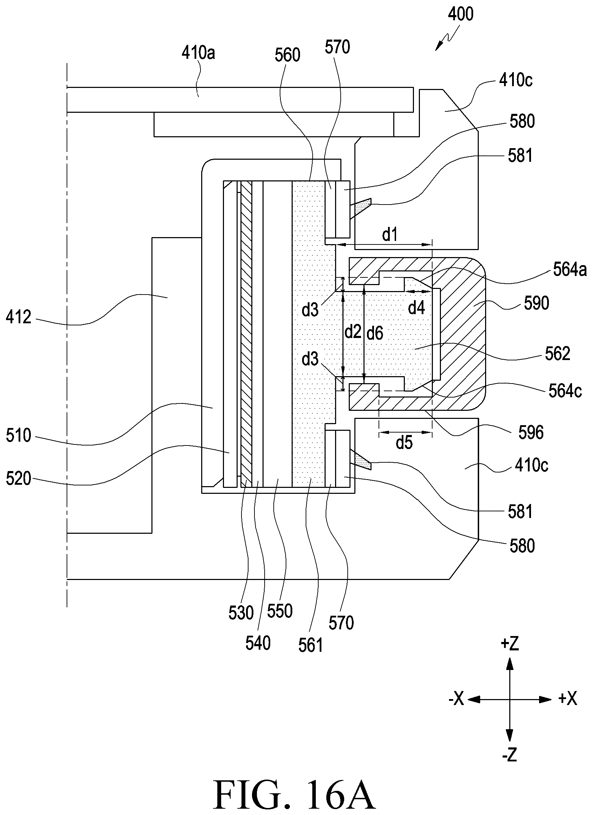

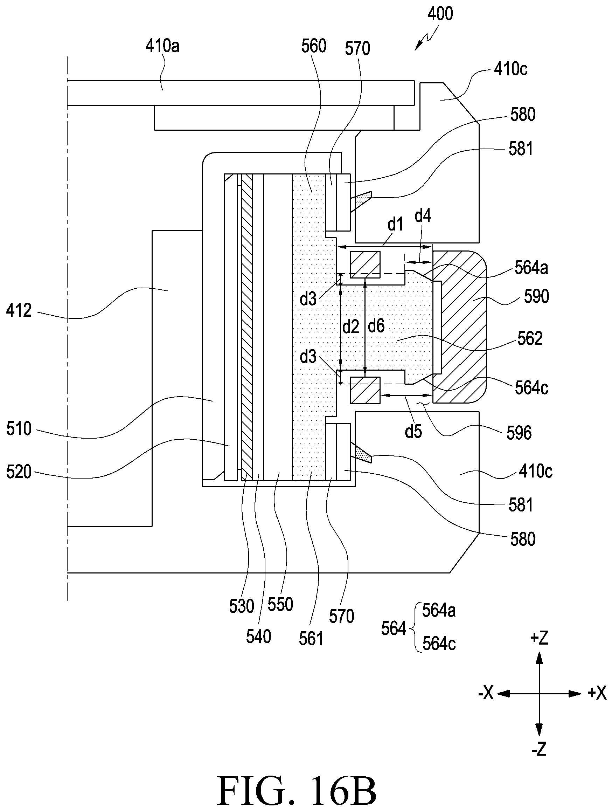

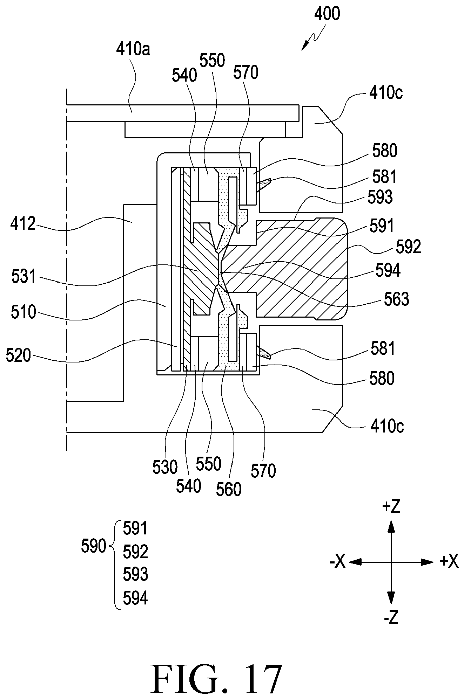

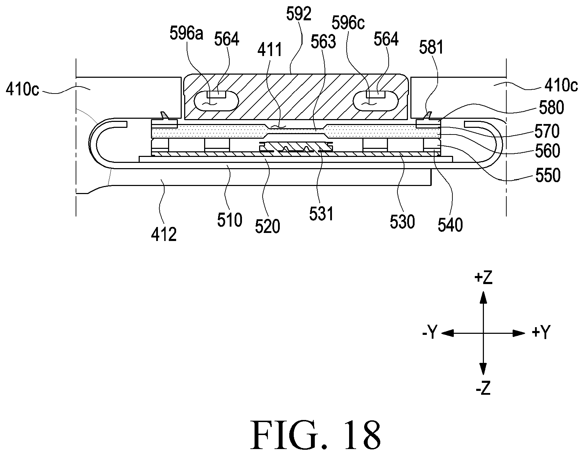

FIG. 15A is a view of a key assembly 500 embedded in an electronic device 400, viewed from the front of the electronic device 400, when a cover member 590 is pressed from outside of the electronic device 400 according to various embodiments of the disclosure. FIG. 15B is a view of a key assembly 500 embedded in an electronic device 400, viewed from a side surface of the electronic device 400, when a cover member 590 is pressed from outside of the electronic device 400 according to various embodiments of the disclosure. FIGS. 16A and 16B are cross-sectional views schematically illustrating the electronic device 400 of FIG. 15A, taken along line B-B' according to various embodiments of the disclosure. FIG. 17 is a cross-sectional view schematically illustrating the electronic device 400 of FIG. 15A, taken along line C-C' according to various embodiments of the disclosure. FIG. 18 is a cross-sectional view schematically illustrating the electronic device 400 of FIG. 15B, taken along line D-D' according to various embodiments of the disclosure.

Referring to FIGS. 15A to 18, a key assembly 500 may include a second support member 510, a third support member 520, a printed circuit board 530, a first adhesive member 540, a first sealing member 550, a waterproof bracket 560, a second adhesive member 570, a second sealing member 580, and a cover member 590. The configuration of the key assembly 500 of FIGS. 15A to 18 may be identical in whole or part to the configuration of the key assembly 500 of FIGS. 11A to 14.

In FIGS. 15A to 18, 'X' may be defined and interpreted as a width direction of the electronic device 400, 'Y' as a length direction of the electronic device 400, and 'Z' as a thickness direction of the electronic device 400. In an embodiment of the present invention, 'X' may mean a 1-1th direction (+X direction) and a 1-2th direction (-X direction). In an embodiment of the present invention, 'Y' may mean a 2-1th direction (+Y direction) and a 2-2th direction (-Y direction). In an embodiment of the present invention, 'Z' may mean a 3-1th direction (+Z direction) and a 3-2th direction (-Z direction).

According to various embodiments, FIGS. 15A to 18 are views illustrating the structure of the key assembly 500 when the cover member 590 is pressed outside the electronic device 400.

According to various embodiments, FIG. 16A is a cross-sectional view of the electronic device 400 including the cover member 590 of FIG. 10A. FIG. 16B is a cross-sectional view of the electronic device 400 including the cover member 590 of FIG. 10B. According to various embodiments, referring to FIGS. 16A and 16B, when the cover member 590 is pressed from outside of the electronic device 400 in the 1-2th direction (-X direction), the cover member 590 may be moved by a predetermined interval in the 1-2th direction (-X direction). The cover member 590 may be moved by a predetermined interval within the thickness of the side surface 410c of the housing 410. One surface of the protrusion 562 of the waterproof bracket 560 facing in the 1-1th direction (+X direction) may contact one surface of the recess portion 595 of the cover member 590 facing in the 1-2th direction (-X direction). The protrusion 562 of the waterproof bracket 560 may flow within the hanging hole 596 by a predetermined interval.

According to various embodiments, referring to FIG. 17, as the cover member 590 moves by a predetermined interval in the 1-2th direction (-X direction), the pressing portion 594 of the cover member 590 may press the concave portion 563 of the waterproof bracket 560. The concave portion 563 of the waterproof bracket 560 may be pressed by a predetermined interval in the 1-2th direction (-X direction). The concave portion 563 of the waterproof bracket 560 may press the switch 531 of the printed circuit board 530 while being pressed in the 1-2th direction (-X direction). The switch 531 of the printed circuit board 530 may be pressed to perform a designated operation.

According to various embodiments, referring to FIG. 18, the hook portion 564 of the waterproof bracket 560 may be positioned at an upper side (in the +Z-axis direction) of the hanging hole 596 of the cover member 590. The hook portion 564 of the waterproof bracket 560 may contact an upper surface of the hanging hole 596 of the cover member 590.

According to various embodiments, in the electronic device 400, as the user presses the cover member 590 of the key assembly 500, the cover member 590 may move and perform a designated operation. The cover member 590 is disposed in the opening 411 formed in the side surface 410c of the housing 410 and moves within the opening 411 by a predetermined distance, so that the narrow mounting space may be utilized without securing a separate moving space.

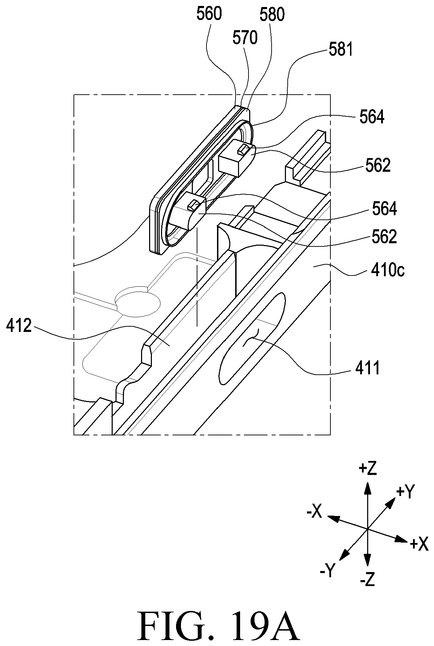

FIGS. 19A to 19E are views sequentially illustrating assembly of a key assembly 500.

Referring to FIGS. 19A to 19E, a key assembly 500 may include a second support member 510, a third support member 520, a printed circuit board 530, a first adhesive member 540, a first sealing member 550, a waterproof bracket 560, a second adhesive member 570, a second sealing member 580, and a cover member 590. The configuration of the key assembly 500 of FIGS. 19A to 19F may be identical in whole or part to the configuration of the key assembly 500 of FIGS. 7 to 10.

In FIGS. 19A to 19E, 'X' may be defined and interpreted as a width direction of the electronic device 400, 'Y' as a length direction of the electronic device 400, and 'Z' as a thickness direction of the electronic device 400. In an embodiment of the present invention, 'X' may mean a 1-1th direction (+X direction) and a 1-2th direction (-X direction). In an embodiment of the present invention, 'Y' may mean a 2-1th direction (+Y direction) and a 2-2th direction (-Y direction). In an embodiment of the present invention, 'Z' may mean a 3-1th direction (+Z direction) and a 3-2th direction (-Z direction).

According to various embodiments, referring to FIG. 19A, an assembly in which the waterproof bracket 560, the second adhesive member 570, and the second sealing member 580 are assembled may be inserted between the side surface 410c of the housing 410 and the first support member 412.

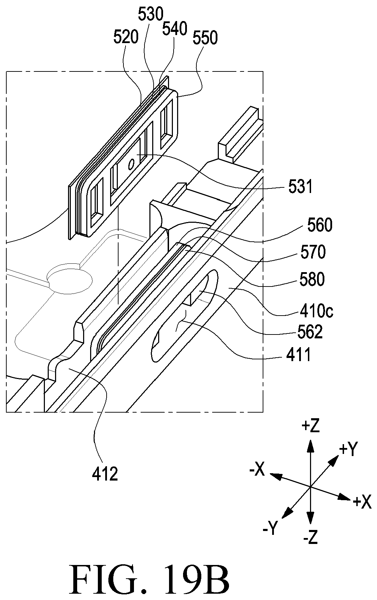

According to various embodiments, referring to FIG. 19B, an assembly in which the third support member 520, the printed circuit board 530, the first adhesive member 540, and the first sealing member 550 are assembled may be inserted between the first support member 412 and the assembly in which the waterproof bracket 560, the second adhesive member 570, and the second sealing member 580 are assembled.

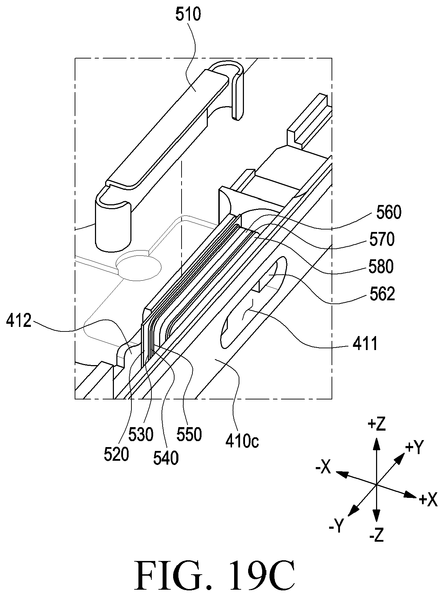

According to various embodiments, referring to FIG. 19C, the second support member 510 may be inserted between the first support member 412 and the assembly in which the third support member 520, the printed circuit board 530, the first adhesive member 540, and the first sealing member 550 are assembled.

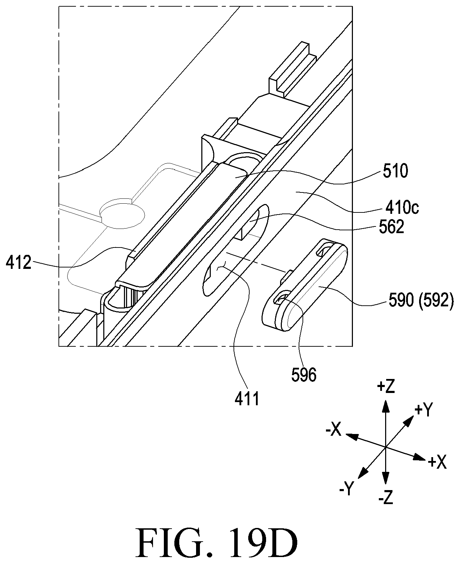

According to various embodiments, referring to FIG. 19D, the cover member 590 may be inserted into the opening 411 formed in the side surface 410c of the housing 410 from the outside of the electronic device 400.

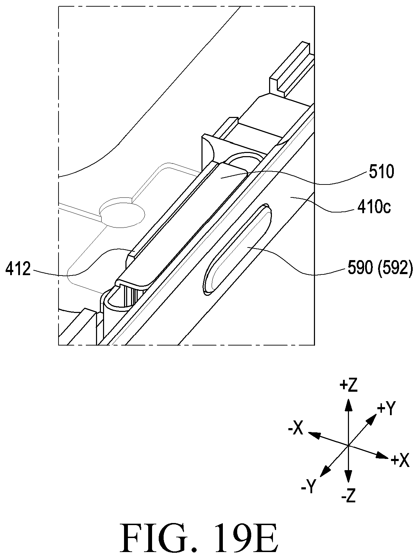

According to various embodiments, referring to FIG. 19E, the cover member 590 inserted into the opening 411 may be fixed by being coupled to the waterproof bracket 560.

An electronic device according to various embodiments of the disclosure may comprise a housing including an opening formed in one surface thereof and a first support member which is spaced apart from the one surface in a first direction and a position of at least part of the first support member corresponding to the opening, and a key assembly disposed between the opening and the first support member. The key assembly may include a second support member disposed on the first support member, a printed circuit board disposed on the second support member and including a switch, a waterproof bracket including a plate comprising a first surface facing in the first direction, the first surface facing the switch, and a second surface facing in a second direction opposite to the first direction, the second surface corresponding to the opening, and a protrusion protruding from the second surface of the plate in the second direction, and a cover member inserted into the opening to be coupled to the waterproof bracket. The protrusion includes a hook having a first size protruding in a direction perpendicular to the first direction. The cover member may include a hanging hole formed, in at least a portion of a side surface thereof, to have a second size larger than the first size so that the hook is insertable into the hanging hole, and a relative position of the hook inside of the hanging hole is variable and movable.

According to an embodiment, the housing may include a front surface, a rear surface, and a side surface surrounding a space between the front surface and the rear surface. The opening may be formed to penetrate the side surface. The hanging hole, which is a space in which a relative position of the hook is variable, may be disposed within a thickness of the side surface.

According to an embodiment, the key assembly may further include a third support member disposed between the second support member and the printed circuit board and supporting the printed circuit board.

According to an embodiment, the key assembly may further include a first sealing member, disposed on the printed circuit board, configured to support the printed circuit board, and configured be waterproof.

According to an embodiment, the first sealing member may include at least one hole, and the switch may penetrate the at least one hole.

According to an embodiment, the protrusion may include a first protrusion formed on one side of the waterproof bracket and a second protrusion formed on another side of the waterproof bracket.

According to an embodiment, the hook may protrude in a direction perpendicular to the first direction by a third length, and the hook may be formed to have a fourth length from one end of the protrusion in the first direction.

According to an embodiment, the first protrusion may include a 1-1th hook protruding in a third direction perpendicular to the first direction and a 1-2th hook protruding in a fourth direction opposite to the third direction. The second protrusion may include a 2-1th hook protruding in the third direction perpendicular to the first direction and a 2-2th hook protruding in the fourth direction.

According to an embodiment, the waterproof bracket may further include a concave portion recessed from the second surface in the first direction.

According to an embodiment, the key assembly may further include a ring-shaped second sealing member for waterproofing on the waterproof bracket, and the second sealing member may include a protruding slit protruding in the second direction from one surface facing in the second direction.

According to an embodiment, the key assembly may further include a second adhesive member disposed between the waterproof bracket and the second sealing member.

According to an embodiment, the waterproof bracket is configured to be inhibited from moving by external pressure on the key assembly.

According to an embodiment, the cover member may further include a first surface facing in the first direction, a second surface facing in the second direction, a third surface connecting the first surface and the second surface, and a pressing portion protruding from the first surface in the first direction.

According to an embodiment, the pressing portion may be formed at a central portion of the first surface and, when viewed in the first direction, overlap, in position, the switch of the printed circuit board.

According to an embodiment, the cover member may further include a recess portion formed to be recessed from the first surface in the second direction and receiving the protrusion of the waterproof bracket.

An electronic device according to various embodiments of the disclosure may comprise a housing including an opening formed in one surface thereof and a first support member spaced apart from the one surface in a first direction and having at least a portion, a position of which corresponds to the opening, and a key assembly disposed between the opening and the first support member. The key assembly may include a second support member disposed on the first support member, a printed circuit board disposed on the second support member and including a switch, a waterproof bracket including a plate having a first surface facing in the first direction, the first surface facing the switch, and a second surface facing in a second direction opposite to the first direction, the second surface corresponding to the opening, and a protrusion protruding in the second direction, and a cover member inserted into the opening to be coupled to the waterproof bracket. The protrusion may include at least one hook protruding by a third length in a direction perpendicular to the first direction and formed to have a fourth length in the first direction from one end of the protrusion. The cover member may include a hanging hole formed, in at least a portion of a side surface thereof, to have a fifth size larger than the fourth size so that the hook is insertable into the hanging hole, and a relative position of the hook is variable and movable inside.

According to an embodiment, a housing may include a front surface, a rear surface, and a side surface surrounding a space between the front surface and the rear surface. The opening may be formed to penetrate the side surface. The hanging hole, which is a space in which a relative position of the hook is changed, may be disposed within a thickness of the side surface.

According to an embodiment, the cover member may further include a first surface facing in the first direction, a second surface facing in the second direction, a third surface connecting the first surface and the second surface, and a pressing portion protruding from the first surface in the first direction.

According to an embodiment, the pressing portion may be formed at a central portion of the first surface and, when viewed in the first direction, overlap, in position, the switch of the printed circuit board.

According to an embodiment, the cover member may further include a recess portion formed to be recessed from the first surface in the second direction and receiving the protrusion of the waterproof bracket.
a key assembly disposed between the opening and the first support member, wherein the key assembly includes:
It is apparent to one of ordinary skill in the art that the key assembly 500 and the electronic device 400 including the same according to various embodiments of the present invention as described above are not limited to the above-described embodiments and those shown in the drawings, and various changes, modifications, or alterations may be made thereto without departing from the scope of the present invention, which is solely defined by the claims.

## Claims

1. An electronic device (400), comprising:
a housing (410) including an opening (411) formed in one surface thereof and a first support member (412) which is spaced apart from the one surface in a first direction and a position of at least part of the first support member (412) corresponding to the opening (411); and
a key assembly (500) disposed between the opening (411) and the first support member (412), wherein the key assembly (500) includes:
a second support member (510) disposed on the first support member (412);
a printed circuit board (530) disposed on the second support member (510) and including a switch (531);
a waterproof bracket (560) including a plate (561) comprising a first surface (561a) facing in the first direction, the first surface (561a) facing the switch (531), and a second surface (561b) facing in a second direction opposite to the first direction, the second surface (561b) corresponding to the opening (411), and a protrusion (562) protruding from the second surface (561b) of the plate (561) in the second direction; and
a cover member (590) inserted into the opening (411) to be coupled to the waterproof bracket (560),
wherein the protrusion (562) includes a hook having a first size protruding in a direction perpendicular to the first direction,
wherein the cover member (590) includes a hanging hole (596) formed, in at least a portion of a side surface thereof, to have a second size larger than the first size so that the hook is insertable into the hanging hole (596), and
wherein a relative position of the hook inside of the hanging hole (596) is variable.

2. The electronic device (400) of claim 1, wherein the housing (410) includes a front surface (410a), a rear surface (410b), and a side surface (410c) surrounding a space between the front surface (410a) and the rear surface (410b),
wherein the opening (411) is formed to penetrate the side surface (410c), and
wherein the hanging hole (596), which is a space in which a relative position of the hook is variable, is disposed within a thickness of the side surface (410c).

3. The electronic device (400) of claim 1, wherein the key assembly (500) further includes a third support member (520) disposed between the second support member (510) and the printed circuit board (530) and supporting the printed circuit board (530).

4. The electronic device (400) of claim 1, wherein the key assembly (500) further includes a first sealing member (550) disposed on the printed circuit board (530), configured to support the printed circuit board (530), and configured to be waterproof.

5. The electronic device (400) of claim 4, wherein the first sealing member (550) includes at least one hole (596), and wherein the switch (531) penetrates the at least one hole (596).

6. The electronic device (400) of claim 1, wherein the protrusion (562) includes a first protrusion (562a) formed on one side of the waterproof bracket (560) and a second protrusion (562b) formed on another side of the waterproof bracket (560).

7. The electronic device (400) of claim 1, wherein the hook protrudes in a direction perpendicular to the first direction by a third length, and
wherein the hook is formed to have a fourth length from one end of the protrusion (562) in the first direction.

8. The electronic device (400) of claim 6, wherein the first protrusion (562a) includes a 1-1th hook (564a) protruding in a third direction perpendicular to the first direction and a 1-2th hook (564c) protruding in a fourth direction opposite to the third direction, and
wherein the second protrusion (562b) includes a 2-1th hook (564b) protruding in the third direction perpendicular to the first direction and a 2-2th hook protruding in the fourth direction.

9. The electronic device (400) of claim 1, wherein the waterproof bracket (560) further includes a concave portion (563) recessed from the second surface (561b) in the first direction.

10. The electronic device (400) of claim 1, wherein the key assembly (500) further includes a ring-shaped second sealing member (580) for waterproofing on the waterproof bracket (560), and wherein the second sealing member (580) includes a protruding slit (581) protruding in the second direction from one surface facing in the second direction.

11. The electronic device (400) of claim 10, wherein the key assembly (500) further includes a second adhesive member (570) disposed between the waterproof bracket (560) and the second sealing member (580).

12. The electronic device (400) of claim 1, wherein the waterproof bracket (560) is configured to be inhibited from moving by external pressure on the key assembly (500).

13. The electronic device (400) of claim 1, wherein the cover member (590) further includes:
a first surface (591) facing in the first direction;
a second surface (592) facing in the second direction;
a third surface (593) connecting the first surface (591) and the second surface (592); and
a pressing portion protruding from the first surface (591) in the first direction.

14. The electronic device (400) of claim 13, wherein the pressing portion is formed at a central portion of the first surface (591) and, when viewed in the first direction, overlaps, in position, the switch (531) of the printed circuit board (530).

15. The electronic device (400) of claim 13, wherein the cover member (590) further includes a recess portion (595) formed to be recessed from the first surface (591) in the second direction and receiving the protrusion (562) of the waterproof bracket (560).

## Patentansprüche

1. Elektronische Vorrichtung (400), umfassend:
ein Gehäuse (410) mit einer in einer Oberflächen davon ausgebildeten Öffnung (411) und einem ersten Stützelement (412), das in einer ersten Richtung von der einen Oberfläche beabstandet ist, wobei eine Position zumindest eines Teils des ersten Stützelements (412) der Öffnung (411) entspricht; und
eine Schlüsselanordnung (500), die zwischen der Öffnung (411) und dem ersten Stützelement (412) angeordnet ist, wobei die Schlüsselanordnung (500) Folgendes umfasst:
ein zweites Stützelement (510), das auf dem ersten Stützelement (412) angeordnet ist;
eine Leiterplatte (530), die auf dem zweiten Stützelement (510) angeordnet ist und einen Schalter (531) umfasst;
eine wasserdichte Halterung (560) mit einer Platte (561), die eine in die erste Richtung weisende erste Oberfläche (561a), welche erste Oberfläche (561a) dem Schalter (531) zugewandt ist, und eine in eine zweite, der ersten Richtung entgegengesetzte Richtung weisende zweite Oberfläche (561b), welche zweite Oberfläche (561b) der Öffnung (411) entspricht, und einen Vorsprung (562) umfasst, der von der zweiten Oberfläche (561b) der Platte (561) in die zweite Richtung vorsteht; und
ein Abdeckelement (590), das in die Öffnung (411) eingesetzt ist, um mit der wasserdichten Halterung (560) gekoppelt zu sein,
wobei der Vorsprung (562) einen Haken mit einer ersten Größe umfasst, der in einer Richtung senkrecht zur ersten Richtung vorsteht,
wobei das Abdeckelement (590) ein Aufhängeloch (596) umfasst, das in mindestens einem Abschnitt einer Seitenfläche davon ausgebildet ist, um eine zweite Größe zu haben, die größer ist als die erste Größe, so dass der Haken in das Aufhängeloch (596) einführbar ist, und
wobei eine relative Position des Hakens innerhalb des Aufhängelochs (596) variierbar ist.

2. Elektronische Vorrichtung (400) nach Anspruch 1, wobei das Gehäuse (410) eine Frontfläche (410a), eine Rückfläche (410b) und eine Seitenfläche (410c), die einen Raum zwischen der Frontfläche (410a) und der Rückfläche (410b) umgibt, umfasst,
wobei die Öffnung (411) so ausgebildet ist, dass sie die Seitenfläche (410c) durchdringt, und
wobei das Aufhängeloch (596), bei dem es sich um einen Raum handelt, in dem eine relative Position des Hakens variierbar ist, innerhalb einer Dicke der Seitenfläche (410c) angeordnet ist.

3. Elektronische Vorrichtung (400) nach Anspruch 1, wobei die Schlüsselanordnung (500) ferner ein drittes Stützelement (520) umfasst, das zwischen dem zweiten Stützelement (510) und der Leiterplatte (530) angeordnet ist und die Leiterplatte (530) stützt.

4. Elektronische Vorrichtung (400) nach Anspruch 1, wobei die Schlüsselanordnung (500) ferner ein erstes Dichtungselement (550) umfasst, das auf der Leiterplatte (530) angeordnet ist, zur Abstützung der Leiterplatte (530) konfiguriert ist und wasserdicht ausgebildet ist.

5. Elektronische Vorrichtung (400) nach Anspruch 4, wobei das erste Dichtungselement (550) mindestens ein Loch (596) umfasst, und wobei der Schalter (531) das mindestens eine Loch (596) durchdringt.

6. Elektronische Vorrichtung (400) nach Anspruch 1, wobei der Vorsprung (562) einen ersten Vorsprung (562a), der auf einer Seite der wasserdichten Halterung (560) ausgebildet ist, und einen zweiten Vorsprung (562b) umfasst, der auf einer anderen Seite der wasserdichten Halterung (560) ausgebildet ist.

7. Elektronische Vorrichtung (400) nach Anspruch 1, wobei der Haken um eine dritte Länge in einer Richtung senkrecht zur ersten Richtung vorsteht, und
wobei der Haken so ausgebildet ist, dass er eine vierte Länge von einem Ende des Vorsprungs (562) in der ersten Richtung aufweist.

8. Elektronische Vorrichtung (400) nach Anspruch 6, wobei der erste Vorsprung (562a) einen 1-1-ten Haken (564a), der in eine dritte Richtung senkrecht zur ersten Richtung vorsteht, und einen 1-2-ten Haken (564c) umfasst, der in eine vierte Richtung entgegengesetzt zur dritten Richtung vorsteht, und
wobei der zweite Vorsprung (562b) einen 2-1-ten Haken (564b), der in die dritte Richtung senkrecht zur ersten Richtung vorsteht, und einen 2-2-ten Haken umfasst, der in die vierte Richtung vorsteht.

9. Elektronische Vorrichtung (400) nach Anspruch 1, wobei die wasserdichte Halterung (560) ferner einen konkaven Abschnitt (563) umfasst, der von der zweiten Oberfläche (561b) in der ersten Richtung zurückgesetzt ist.

10. Elektronische Vorrichtung (400) nach Anspruch 1, wobei die Schlüsselanordnung (500) ferner ein ringförmiges zweites Dichtungselement (580) zur Wasserabdichtung an der wasserdichten Halterung (560) umfasst, und wobei das zweite Dichtungselement (580) einen vorstehenden Schlitz (581) umfasst, der in der zweiten Richtung von einer in die zweite Richtung weisenden Oberfläche vorsteht.

11. Elektronische Vorrichtung (400) nach Anspruch 10, wobei die Schlüsselanordnung (500) ferner ein zweites Klebeelement (570) umfasst, das zwischen der wasserdichten Halterung (560) und dem zweiten Dichtungselement (580) angeordnet ist.

12. Elektronische Vorrichtung (400) nach Anspruch 1, wobei die wasserdichte Halterung (560) so konfiguriert ist, dass sie durch äußeren Druck auf die Schlüsselanordnung (500) an einer Bewegung gehindert wird.

13. Elektronische Vorrichtung (400) nach Anspruch 1, wobei das Abdeckelement (590) ferner Folgendes umfasst:
eine erste Oberfläche (591), die in die erste Richtung weist;
eine zweite Oberfläche (592), die in die zweite Richtung weist;
eine dritte Oberfläche (593), die die erste Oberfläche (591) und die zweite Oberfläche (592) verbindet; und
einen Druckabschnitt, der von der ersten Oberfläche (591) in die erste Richtung vorsteht.

14. Elektronische Vorrichtung (400) nach Anspruch 13, wobei der Druckabschnitt an einem zentralen Abschnitt der ersten Oberfläche (591) ausgebildet ist und, in der ersten Richtung betrachtet, in seiner Position den Schalter (531) der Leiterplatte (530) überlappt.

15. Elektronische Vorrichtung (400) nach Anspruch 13, wobei das Abdeckelement (590) ferner einen Aussparungsabschnitt (595) umfasst, der so ausgebildet ist, dass er in der zweiten Richtung von der ersten Oberfläche (591) zurückgesetzt ist und den Vorsprung (562) der wasserdichten Halterung (560) aufnimmt.

## Revendications

1. Dispositif électronique (400), comprenant :
un boîtier (410) comprenant une ouverture (411) formée dans une surface de celui-ci et un premier composant de support (412) qui est espacé de ladite surface dans une première direction et dont une position d'au moins une partie du premier composant de support (412) correspond à l'ouverture (411) ; et
un ensemble clé (500) disposé entre l'ouverture (411) et le premier composant de support (412), dans lequel l'ensemble clé (500) comprend :
un deuxième composant de support (510) disposé sur le premier composant de support (412) ;
une carte de circuit imprimé (530) disposée sur le deuxième composant de support (510) et comprenant un commutateur (531) ;
un support étanche (560) comprenant une plaque (561) comprenant une première surface (561a) orientée dans la première direction, la première surface (561a) faisant face au commutateur (531), et une deuxième surface (561b) orientée dans une deuxième direction opposée à la première direction, la deuxième surface (561b) correspondant à l'ouverture (411), et une saillie (562) faisant saillie depuis la deuxième surface (561b) de la plaque (561) dans la deuxième direction ; et
un composant de couvercle (590) inséré dans l'ouverture (411) pour être couplé au support étanche (560),
dans lequel la saillie (562) comprend un crochet ayant une première taille faisant saillie dans une direction perpendiculaire à la première direction,
dans lequel le composant de couvercle (590) comprend un trou d'accrochage (596) formé, dans au moins une partie d'une surface latérale de celui-ci, de manière à avoir une deuxième taille supérieure à la première taille de sorte que le crochet puisse être inséré dans le trou d'accrochage (596), et
dans lequel une position relative du crochet à l'intérieur du trou d'accrochage (596) est variable.

2. Dispositif électronique (400) selon la revendication 1, dans lequel le boîtier (410) comprend une surface avant (410a), une surface arrière (410b) et une surface latérale (410c) entourant un espace entre la surface avant (410a) et la surface arrière (410b),
dans lequel l'ouverture (411) est formée de manière à traverser la surface latérale (410c), et
dans lequel le trou d'accrochage (596), qui est un espace dans lequel une position relative du crochet est variable, est disposé dans une épaisseur de la surface latérale (410c).

3. Dispositif électronique (400) selon la revendication 1, dans lequel l'ensemble clé (500) comprend en outre un troisième composant de support (520) disposé entre le deuxième composant de support (510) et la carte de circuit imprimé (530) et supportant la carte de circuit imprimé (530).

4. Dispositif électronique (400) selon la revendication 1, dans lequel l'ensemble clé (500) comprend en outre un premier composant d'étanchéité (550) disposé sur la carte de circuit imprimé (530), configuré pour supporter la carte de circuit imprimé (530), et configuré pour être étanche.

5. Dispositif électronique (400) selon la revendication 4, dans lequel le premier composant d'étanchéité (550) comprend au moins un trou (596), et dans lequel le commutateur (531) traverse l'au moins un trou (596).

6. Dispositif électronique (400) selon la revendication 1, dans lequel la saillie (562) comprend une première saillie (562a) formée sur un côté du support étanche (560) et une seconde saillie (562b) formée sur un autre côté du support étanche (560).

7. Dispositif électronique (400) selon la revendication 1, dans lequel le crochet fait saillie dans une direction perpendiculaire à la première direction sur une troisième longueur, et
dans lequel le crochet est formé de manière à avoir une quatrième longueur à partir d'une extrémité de la saillie (562) dans la première direction.

8. Dispositif électronique (400) selon la revendication 6, dans lequel la première saillie (562a) comprend un crochet 1-1th (564a) faisant saillie dans une troisième direction perpendiculaire à la première direction et un crochet 1-2th (564c) faisant saillie dans une quatrième direction opposée à la troisième direction, et
dans lequel la seconde saillie (562b) comprend un crochet 2-1th (564b) faisant saillie dans la troisième direction perpendiculaire à la première direction et un crochet 2-2th faisant saillie dans la quatrième direction.

9. Dispositif électronique (400) selon la revendication 1, dans lequel le support étanche (560) comprend en outre une portion concave (563) en retrait depuis la deuxième surface (561b) dans la première direction.

10. Dispositif électronique (400) selon la revendication 1, dans lequel l'ensemble clé (500) comprend en outre un second composant d'étanchéité (580) en forme d'anneau destiné à assurer l'étanchéité sur le support étanche (560), et dans lequel le second composant d'étanchéité (580) comprend une fente saillante (581) faisant saillie dans la deuxième direction depuis une surface orientée dans la deuxième direction.

11. Dispositif électronique (400) selon la revendication 10, dans lequel l'ensemble clé (500) comprend en outre un second composant adhésif (570) disposé entre le support étanche (560) et le second composant d'étanchéité (580).

12. Dispositif électronique (400) selon la revendication 1, dans lequel le support étanche (560) est configuré pour être empêché de se déplacer par une pression externe exercée sur l'ensemble clé (500).

13. Dispositif électronique (400) selon la revendication 1, dans lequel le composant de couvercle (590) comprend en outre :
une première surface (591) orientée dans la première direction ;
une deuxième surface (592) orientée dans la deuxième direction ;
une troisième surface (593) reliant la première surface (591) et la deuxième surface (592) ; et
une portion de pression faisant saillie depuis la première surface (591) dans la première direction.

14. Dispositif électronique (400) selon la revendication 13, dans lequel la portion de pression est formée au niveau d'une portion centrale de la première surface (591) et, lorsqu'elle est vue dans la première direction, chevauche, en position, le commutateur (531) de la carte de circuit imprimé (530).

15. Dispositif électronique (400) selon la revendication 13, dans lequel le composant de couvercle (590) comprend en outre une portion en retrait (595) formée de manière à être en retrait depuis la première surface (591) dans la deuxième direction et recevant la saillie (562) du support étanche (560).
